# EUROPEAN PATENT SPECIFICATION

(11) **EP 1 833 934 B1**
(45) Date of publication and mention of the grant of the patent: **21.12.2011**
(21) Application number: 05818472.2
(22) Date of filing: 08.11.2005
(51) Int. Cl.: C09D 151/00, C08F 290/04, C08F 293/00, C08F 2/38

(54) **PROCESS FOR PRODUCING A COATING**
BESCHICHTUNGSVERFAHREN
PROCEDE DE PRODUCTION D'UN REVETEMENT

(30) Priority: 08.11.2004 US 983875
(43) Date of publication of application: 19.09.2007
(73) Proprietor: E.I. DU PONT DE NEMOURS AND COMPANY, Wilmington, DE 19898 (US)
(72) Inventor: BUTERA, Robert, James, Havertown, Pennsylvania 19083 (US); KELLY, Renee, J., Media, Pennsylvania 29063 (US); MA, Sheau-Hwa, West Chester, Pennsylvania 19382 (US)
(74) Representative: DuPont Performance Coatings Biering/Blum/Kimpel
(86) International application number: PCT/US2005/040462
(87) International publication number: WO 2006/052984

(56) References cited:
- EP-A- 1 555 274
- WO-A-93/03081
- WO-A-2006/007999
- US-A- 5 558 966
- US-B1- 6 503 975

## Description

### FIELD OF THE INVENTION

This invention relates to a process For producing a coating with coating compositions and in particular rapid drying lacquer coating compositions that are particularly useful for automotive refinishing.

### BACKGROUND OF THE INVENTION

To refinish or repair a finish on vehicle, such as a basecoat/ clearcoat finish on automobile or truck bodies, different fast-drying coating compositions have been developed. A number of pigmented and clear air-dry acrylic lacquers have been used in the past to repair basecoat/ clearcoat finishes, but none meet the rapid drying times that are desired in combination with outstanding physical properties, such as chip and humidity resistance, and adhesion, as well as excellent appearance.

A key concern to a refinish customer which is typically the vehicle owner is that the coating in use has excellent physical properties, such as chip and humidity resistance, and adhesion, as well as excellent aesthetic appearance.

Another key concern of the automobile and truck refinish industry is productivity, i.e., the ability to complete an entire refinish operation in the least amount of time. To accomplish a high level of productivity, any coatings applied need to have the ability to dry at ambient or elevated temperature conditions in a relatively short period of time. The term "dry" means that the resulting finish is physically dry to the touch in a relatively short period of time to minimize dirt pick-up, and, in the case of the basecoat, to allow for the application of the subsequent clear coat.

It is also desirable to have quick drying basecoats for additional reasons. If the applied basecoat composition layer has not dried sufficiently before the clearcoat composition is applied, then the application of the clearcoat will disturb the basecoat layer and the appearance of the basecoat will be adversely affected. For basecoats containing special effect pigments, e.g., flake pigments such as metallic and pearlescent flakes, the metallic flake control and metallic appearance (or downflop) of these basecoats will suffer due to disturbance of the flake pigment by intermixing of the coating layers at their interface. "Downflop" refers to a phenomenon associated with metallic effect coatings wherein the color varies with the angle of view to provide a three dimensional metallic effect on the surface of the vehicle.

Cost and volatile organic solvent content (VOCs) are further concerns in formulating automotive refinish coating compositions, For example, cellulose acetate butyrate (CAB) resins have been used to shorten the dry to handle time and as rheology control additives to enhance metallic flake control and other properties in refinish basecoats, but coating compositions containing these CAB material require an undesirable high amount of organic solvent. In addition, these CAB materials are relatively expensive and require added steps in the coatings manufacturing process. The CAB materials are also specialty products that arc not widely manufactured.

Furthermore, WO93/03081 discloses coating compositions comprising a graft copolymer and a polyisocyanate crosslinking agent. The graft copolymer comprises a polymeric backbone of polymerized ethylenically unsaturated monomers with hydroxyl groups and a macromonomer attached to the backbone at a single terminal point. The macromonomer is prepared by using a catalytic chain transfer agent.

It would be advantageous, therefore, to have a process using a lacquer coating composition, especially a refinish basecoat lacquer, having a short tack-fiee drying time at ambient temperature conditions, good metallic flake control and appearance, that is less expensive, that has a reduced amount of regulated emissions, and has the ability to form a finish with excellent chip and humidity resistance and adhesion. The composition to be used in this invention has this unique combination of properties.

### SUMMARY OF THE INVENTION

This invention is directed to a process for producing a coating on the surface of a substrate, said process comprising:
applying a layer of a lacquer on said surface; and
drying said layer to form said coating on said surface of said substrate, wherein, said lacquer is a pigmented basecoat or a clearcoat composition,
said lacquer composition comprising a graft copolymer with segmented side arm(s), wherein the graft copolymer has a polymeric backbone and
segmented arm(s) formed of at least two polymeric segments of differing composition, grafted at a single point thereof to the backbone, wherein
   (a) the backbone is of polymerized ethylenically unsaturated monomer(s); and
   (b) the segmented arm(s) are of polymerized ethylenically unsaturated monomer(s) that are attached to the backbone via a single point,
and wherein at least one of the arm segments, which is at least one segment separated from the backbone, and the backbone contain one or more functional groups that are capable of interacting with each other for the formation of a reversible network, and the arm segment(s) adjacent to said arm segment is essentially free of said interactive functional groups, wherein the functional groups are selected from at least one of the group consisting of carboxylic acid, hydroxyl, urea, amide, and ethylene oxide groups, and any mixture thereof, and wherein, the lacquer coating composition contains 5 to 90% by weight, based on the weight of the coating composition, of a film-forming binder containing the graft copolymer and 10 to 95% by weight, based on the weight of the coating composition, of a volatile organic liquid carrier and optionally contains pigments in a pigment to binder weight ratio of 0.1/100 to 200/100.

Preferably, the graft copolymer has an average of two arm segments on each arm and the inner arm segment, which is positioned between the backbone and the outer segment, is a non-functional segment, essentially free of functional groups.

The lacquer composition is most suited for use as a pigmented basecoat lacquer in automotive refinish applications, on top of which a transparent (clear) topcoat is applied.

While this composition is preferably used as a lacquer coating which dries via solvent evaporation absent any substantial crosslinking occurring, it optionally may contain a polyisocyanate crosslinking agent for further improved film properties.

Also included within the scope of this invention is a substrate coated with the lacquer coating composition disclosed herein.

### DETAILED DESCRIPTION OF THE INVENTION

As used herein:
"Lacquer" means a coating composition that dries primarily by solvent evaporation and does not require crosslinking to form a film having the desired physical properties.
All "molecular weights" are determined by gel permeation chromatography (GPC) using polystyrene as the standard.
"Tg" (glass transition temperature) of the polymer can be measured by differential scanning calorimetry (DSC) or it can be calculated as described by Fox in Bull. Amer. Physics Soc., 1, 3, page 123 (1956),
"Acrylic polymer" means a polymer comprised of polymerized "(meth)acrylate(s)" which mean acrylates and methacrylates, optionally copolymerized with other ethylenically unsaturated monomers, such as acrylamides, methacrylamides, acrylonitriles, methacrylonitriles, and vinyl aromatics such as styrene.

The present invention includes a pigmented or clear air-dry lacquer, preferably an acrylic lacquer, suited for various coating processes, such as automotive OEM and automotive refinish. The lacquer is particularly well suited for use in automotive refinishing, particularly as a refinish basecoat used for repairing or refinishing color basecoat/olearcoat finishes on auto and truck bodies.

Advantageously, the air-dry lacquer coating compositions formed have excellent physical properties, such as excellent chip and humidity resistance and adhesion, without sacrificing desired fast dry properties at ambient temperatures and overall appearance, such as DOI (distinctness of image) and HOB (head on brightness).

The lacquer coating composition contains 5 to 90% by weight, based on the weight of the coating composition, of a film-forming binder containing a segmented graft polymer, preferably an acrylic polymer, as a replacement for all or part of the cellulose acetate butyrate (CAB) resin in the binder and correspondingly 10 to 95% by weight, based on the weight of the coating composition, of a volatile organic liquid carrier and optionally contains pigments in a pigment to binder weight ratio of 0.1/100 to 200/100.

### Graft Copolymer with Segmented Arms

The graft copolymer with segmented arms used herein, as part of the film forming binder, as a replacement for the CAB resins has a weight average molecular weight ranging from about 5,000-200,000 and preferably about 10,000-100,000, and more preferably in a range from about 15,000-80,000.

This segmented graft copolymer (also referred to herein as an ABA' graft copolymer) is preferably an acrylic polymer. Generally, it can be described as having a polymeric backbone (also referred to herein as the "A' segment") and segmented side chain(s) or so-called segmented arm(s) attached at a single point thereof to the backbone, wherein each ann segment comprises at least two polymeric segments, preferably just 2 segments of differing composition, i.e., an inner segment (referred to as the "B segment") attached directly to the backbone and an outer segment (referred to as the "A segment") attached to the inner segment. By "inner"' and "outer" segments, it is meant the arm segments closest to and farthest from the backbone, respectively.

Preferably, the graft copolymer contains about 10-90%, preferably 20-80%, and more preferably 30-70%, by weight of the backbone and about 90-10%, preferably 80-20%, and more preferably 70-30%, by weight of segmented arms.

In the present invention, the backbone and outer arm segment, A and A', of the graft copolymer have the same or similar composition and both contain at least one interactive functional group described below, while the inner arm segment, B, is substantially different in composition from the A and A' segments and preferably contains substantially no functional groups.

As indicated above, the A and A' segments differ from the B segment by presence of interactive functional groups. The functional groups used in the A and A' segments should be capable of interacting/H-bonding with each other for the formation of a reversible network that is sensitive to shear force, temperature, or pH. The B segment is preferably essentially free of said functional groups.

The interactive/H-bonding functional groups are preferably selected from at least one of the following groups 1 to 6:
1) Hydroxyl groups (e.g., primary or secondary hydroxyl)
2) Acid groups (e.g., carboxyl groups);
3) Urea;
4) Amide;
5) Ethylene Oxide; or
6) Mixtures of any of the above.

The size of each arm segment as well as the backbone will vary depending on the final properties desired. However, each segment including the backbone should be substantially linear and contain on average at least 3 units of monomers and have a number average molecular weight greater than 300. In preferred embodiments, the number of monomers within a single segment is about 10 or more. Also in preferred embodiments, the weight average molecular weight of the total arm is in a range from about 1,000-40,000, more preferably from about 1,500-30,000.

The concentration of and type of interactive functional groups on the outer arm segment and backbone will also vary depending on the particular attribute desired; however, the concentration of interactive groups should be such that at least 1% to 100%, more preferably at least 5 to 60% by weight, of the monomers used to form that given segment or backbone have interactive functional groups.

In the present invention, it is particularly useful to concentrate the interactive functional groups on the outer segment of the arms and the backbone, with the remaining arm segments, preferably just one, containing essentially no functional groups. This construction particularly facilitates the network formation attribute desired.

The graft copolymers of this invention can be prepared in a variety of ways. In one embodiment, the graft copolymer is prepared from a macromonomer having a "segmented" (also referred to herein as a "block") structure, which forms the segmented side arms of the graft copolymer, with only one terminal ethylenically unsaturated group for attachment to the backbone. The macromonomer, having the segmented structure and only one terminal ethylenically unsaturated group (or vinyl terminal group), is typically prepared first. It is then copolymerized with ethylenically unsaturated monomers chosen for the backbone composition to form the graft structure. This graft copolymer can be described as having a backbone having one or more, typically a plurality, of segmented macromonomer side chains or arms attached thereto.

In the macromonomer approach, the macromonomer that forms the side arms is formed essentially like an AB block copolymer in that it contains at least two substantially linear polymeric segments of differing composition that are incorporated in the arm in a non-random manner, to form the individual arm segments. Each segment is formed from different ethylenically unsaturated monomers or monomer mixtures.

To form the segmented arms using this approach, the outer segment (or "A segment") is prepared first as a macromonomer, which has only one terminal ethylenically unsaturated group. The second segment or "B segment" (which forms the inner segment in this example) is then built on the segment A to produce the entire segmented arm. This is also a macromonomer having only one terminal ethylenically unsaturated group which is eventually polymerized into the backbone of the graft copolymer.

As indicated above, each segment is formed from different ethylenically unsaturated monomers or monomer mixtures. The outer arm segment A which is prepared first is a macromonomer generally comprised of polymerized acrylic monomer(s) and optionally other ethylenically unsaturated monomers, such as styrene, of which at least one monomer contains one of the functional groups listed above. The preferred functional groups used in the outer arm are carboxylic acid and hydroxyl groups.

The second segment B which forms the inner segment is then built onto outer segment A to form the segmented macromonomer with only one terminal ethylenically unsaturated group which is eventually polymerized into the backbone of the graft copolymer is prepared from a different set of monomers. The second segment is preferably a non-functional segment preferably comprised of polymerized acrylic monomer(s) and optionally other ethylenically unsaturated monomers such as styrene but which are non-functional, i.e., essentially free of functional groups. By "essentially free", it is meant that the inner segment should contain less than 1% by weight, preferably zero percent by weight, of functionalized acrylic or other functionalized ethylenically unsaturated monomers, based on the total weight of the graft copolymer.

Besides the arm segments, the backbone is also preferably comprised of acrylic monomer(s) and optionally other ethylenically unsaturated monomers such as styrene. The backbone like the outer segment of the arm also contains at least one of the above functional groups.

Even when using the macromonomer approach, the segmented macromonomers used to form the segmented arms on the graft copolymer can be prepared by a number of ways, including sequential addition of different monomers or monomer mixtures to living polymerization reactions such as anionic polymerization, group transfer polymerization, nitroxide-mediated free radical polymerization, atom transfer radical polymerization (ATRP) or reversible addition-fragmentation chain transfer (RAFT) polymerization, and finally converting the living end to a terminal polymerizable double bond, or by sequentially building one segment at a time using catalytic chain transfer agents as described below.

The catalytic chain transfer agent approach is the preferred method for making the segmented macromonomers of this invention. The other living polymerization approaches mentioned above often involve special and costly raw materials including special initiating systems and high purity monomers. Some of them have to be carried out under extreme conditions such as low moisture or low temperature. In addition, some of the initiating systems bring undesirable color, odor, metal complexes, or potentially corrosive halides into the product. Extra steps would be required to remove them. In the preferred method, the catalyst is used at extremely low concentration and has minimum impact on the quality of the product, and the synthesis can be conveniently accomplished in a one-pot process.

In the catalytic chain transfer agent approach, the segmented macromonomers are most conveniently prepared by a multi-step free radical polymerization process to ensure that the resulting segmented macromonomer only has one terminal ethylenically unsaturated group which will polymerize with the backbone monomers to form the graft copolymer. Such a process is taught, for example in U.S. Pat. No. 6,291,620 to Moad et al.

In the first step of the process, the first or outer segment A of the macromonomer is formed using a free radical polymerization method wherein ethylenically unsaturated monomers or monomer mixtures chosen for this segment are polymerized in the presence of cobalt catalytic chain transfer agents or other transfer agents that are capable of terminating the free radical polymer chain and forming a terminal polymerizable double bond in the process. The polymerization is preferably carried out at elevated temperature in an organic solvent or solvent blend using a conventional free radical initiator and Co (II) or (III) chain transfer agent.

Once the first macromonomer segment having the desired molecular weight and conversion is formed, the cobalt chain transfer agent is deactivated by adding a small amount of oxidizing agent such as hydroperoxide. The unsaturated monomers or monomer mixtures chosen for the next segment are then polymerized in the presence of the first segment and more initiator. This step, which can be referred to as a macromonomer step-growth process, is likewise carried out at elevated temperature in an organic solvent or solvent blend using a conventional polymerization initiator. Polymerization is continued until a macromonomer is formed of the desired molecular weight and desired conversion of the second segment into a two-segmented arm.

Preferred cobalt chain transfer agents are described in U.S. Pat. Nos. 4,680,352 to Janowicz et al and 4,722,984 to Janowicz. Most preferred cobalt chain transfer agents are pentacyano cobaltate (II), diaquabis (borondiflurodimethylglyoximato) cobaltate (II), and diaquabis (borondifluorophenylglyoximato) cobaltate (II). Typically these chain transfer agents are used at concentrations of about 2-5000 ppm based on the total weight of the monomer depending upon the particular monomers being polymerized and the desired molecular weight. By using such concentrations, macromonomers having the desired molecular weight can be conveniently prepared.

To make distinct arm segments (or blocks), the growth of each segment needs to occur to high conversion. Conversions are determined by size exclusion chromatography (SEC) via integration of polymer to monomer peak. For UV detection, the polymer response factor must be determined for each polymer/monomer polymerization mixture. Typical conversions can be 50% to 100% for each segment or block. Intermediate conversion can lead to segmented (or block) copolymers with a transitioning (or tapering) block where the monomer composition gradually changes to that of the following block as the addition of the monomer or monomer mixture of the next block continues. This may affect polymer properties such as phase separation, thermal behavior and mechanical modulus and can be intentionally exploited to drive properties for specific applications. This may be achieved by intentionally terminating the polymerization when a desired level of conversion (e.g., >80%) is reached by stopping the addition of the initiators or immediately starting the addition of the monomer or monomer mixture of the next block along with the initiator.

After the macromonomer is formed as described above, solvent is optionally stripped off and the backbone monomers used to form the "A' segment" are added to the macromonomer along with additional solvent and polymerization initiator, in order to prepare the graft copolymer structure by conventional free radical polymerization methods. The backbone monomers can be copolymerized with the macromonomers via the single terminal unsaturated group of the macromonomer using any of the conventional azo or peroxide type initiators and organic solvents as described below. The backbone so formed contains polymerized ethylenically unsaturated monomers and any of the monomers including those with functional groups listed below for use in the macromonomer can be used.

Polymerization is generally continued in the same pot at the reflux temperature of the reaction mixture until a graft copolymer is formed having the desired molecular weight.

Besides the macromonomer approach, an alternative method for preparing the graft copolymer of this invention involves reversing some of the steps. The backbone with a desired composition and molecular weight and having a proper concentration of some functional groups that are capable of initiating a living polymerization process or some precursor groups that may be converted to such initiating groups may be synthesized first. Off of these initiating groups, arms of desired segmented structure may be built in a sequential manner by a living polymerization process. As an example, a proper level of 4-(alpha-bromomethyl) styrene may be copolymerized into a backbone composition. Then an atom transfer radical polymerization (ATRP) process may be used to build the segments from the benzyl bromide groups to form the segmented arms of this invention. Another example of an alternative method include synthesizing a segmented copolymer (arms) using one of the living polymerization processes mentioned above and terminating the polymer chain with a reactive group such as carboxylic acid first. The segmented arms are then grafted onto a backbone polymer having a coreactive group such as epoxy. The segmented arms are attached to the backbone through an ester linkage.

Typical solvents that can be used to form the macromonomer or the graft copolymer are alcohols, such as methanol, ethanol, n-propanol, and isopropanol; ketones, such as acetone, butanone, pentanone, and hexanone; alkyl esters of acetic, propionic, and butyric acids, such as ethyl acetate, butyl acetate, and amyl acetate; ethers, such as tetrahydrofuran, diethyl ether, and ethylene glycol and polyethylene glycol monoalkyl and dialkyl ethers such as cellosolves and carbitols; and, glycols such as ethylene glycol and propylene glycol; and mixtures thereof.

Any of the commonly used azo or peroxide type polymerization initiators can be used for preparation of the macromonomer or graft copolymer provided it has solubility in the solution of the solvents and the monomer mixture, and has an appropriate half life at the temperature of polymerization. "Appropriate half life" as used herein is a half-life of about 10 minutes to 4 hours. Most preferred are azo type initiators such as 2,2'-azobis (isobutyronitrile), 2,2'-azobis (2,4-dimethylvaleronitrile), 2,2'-azobis (methylbutyronitrile), and 1,1'-azobis (cyanocyclohexane). Examples of peroxy based initiators are benzoyl peroxide, lauroyl peroxide, t-butyl peroxypivalate, t-butyl peroctoate which may also be used provided they do not adversely react with the chain transfer agents under the reaction conditions for macromonomers.

Generally, monomers that may be polymerized using the methods of this invention include at least one monomer selected from the group consisting of unsubstituted or substituted, alkyl acrylates (such as those having 1-20 carbon atoms in the alkyl group), alkyl methacrylates (such as those having 1-20 carbon atoms in the alkyl group), cycloaliphatic acrylates, cycloaliphatic methacrylates, aryl acrylates, aryl methacrylates, other ethylenically unsaturated monomers such as acrylonitriles, methacrylonitriles, acrylamides, methacrylamides, N-alkylacrylamides, N-alkylmethacrylamides, N,N- dialkylacrylamides, N,N-dialkylmethacrylamides, vinyl aromatics such as styrene, and combinations thereof. Functionalized versions of these monomers and their relative concentrations are especially useful in differentiating the segments of the arms and the backbone, and providing the interactive or H-bonding capability desired.

In the present invention, as indicated above, both the backbone and one of the arm segments, preferably the outer arm segment, contain a functional group, referred to herein as an interactive or H-bonding group, for network formation and better metallic flake control. This group will lead to the formation of a reversible network that is connected by physical forces and is sensitive to shear force, temperature, or pH. This type of system is useful for its rheological properties such as the thixotropic behavior and parallel metallic flake orientation.

Specific monomers or comonomers that have no special functional groups and may be used in this invention include various non-functional acrylic monomers such as methyl methacrylate, ethyl methacrylate, propyl methacrylate (all isomers), butyl methacrylate (all isomers), 2-ethylhexyl methacrylate; isobornyl methacrylate, methacrylonitrile, methyl acrylate, ethyl acrylate, propyl acrylate (all isomers), butyl acrylate (all isomers), 2-ethylhexyl acrylate, isobornyl acrylate, acrylonitrile, etc, and optionally other ethylenically unsaturated monomers, e.g., vinyl aromatics such as styrene, alpha-methyl styrene, t-butyl styrene, and vinyl toluene, etc.

Examples of monomers that can be used to introduce interactive/ H-bonding primary or secondary hydroxyl groups into the graft copolymer of this invention include hydroxyl functional acrylic monomers such as hydroxyl alkyl (meth)acrylates having 1-10 atoms in the alkyl group including 2-hydroxyethyl methacrylate (primary), hydroxypropyl methacrylate (all isomers, primary and secondary), hydroxybutyl methacrylate (all isomers, primary and secondary), 2-hydroxyethyl acrylate (primary), hydroxypropyl acrylate (all isomers, primary and secondary), hydroxybutyl acrylate (all isomers, primary and secondary), other hydroxy alkyl acrylates and methacrylates, and the like.

To introduce interactive/H-bonding acid groups into the graft copolymer at the appropriate backbone or arm segment, acid-functional monomers can be used. Carboxylic acid functional monomers are generally preferred for better compatibility with other binder components in the lacquer coating composition. The most commonly used carboxylic acid group containing monomers are methacrylic acid and acrylic acid. Others include beta-carboxyethyl acrylate, vinyl benzoic acid (all isomers), alpha-methylvinyl benzoic acid (all isomers), and the diacids such as maleic acid, fumaric acid, itaconic acid, and their anhydride form that can be hydrolyzed to the carboxylic acid groups after the polymers are made. Of course, a low level of other types of acid groups, such as sulfonic acid or phosphoric acid may be used.

Useful amide functional monomers which can be used to introduce interactive/H-bonding amide groups into the polymer include acrylamides and methacrylamides and other vinyl monomers containing either a cyclic or acyclic amide group.

Examples of acrylamide or methacrylamide monomers having an acylic amide group are represented by the formula 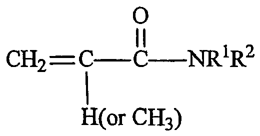 where R¹ and R² are each independently selected from the group consisting of hydrogen, alkyl group, aryl group, arylalkyl group, and alkylaryl group having 1 to 20 carbon atoms, and optionally containing one or more substituents that do not interfere with the polymerization process. Such substituents may include alkyl, hydroxy, amino, ester, acid, acyloxy, amide, nitrile, halogen, alkoxy, etc. Useful examples include methacrylamides such as N-methylmethacrylamide, N-ethylmethacrylamide, N-octylmethacrylamide, N-dodecylmethacrylamide, N-(isobutoxymethyl) methacrylamide, N-phenylmethacrylamide, N-benzylmethacrylamide, N,N-dimethylmethacrylamide, and the like; and acrylamides such as N-methyl acrylamide, N-ethylacrylamide, N-t-butylacrylamide, N-(isobutoxymethyl) acrylamide, N,N-dimethylacrylamide, N,N-diethylacrylamide, N,N-dibutyl acrylamide, and the like.

Examples of vinyl monomers that can be used to introduce cyclic amide groups into the copolymer include acrylic, methacrylic, acrylamide, methacrylamide and some other vinyl monomers. The acrylic, methacrylic, acrylamide and methacrylamide monomers are represented by formula 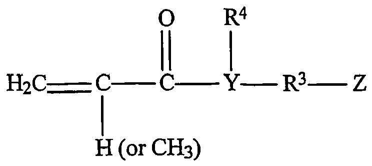 where Y is O or N, R³ is selected from the group consisting of alkyl group, aryl group, arylalkyl group, and alkylaryl group having 1 to 20 carbon atoms and may contain substituents which do not interfere with polymerization such as hydroxy, amino, ester, acid, acyloxy, amide, nitrile, halogen, alkoxy, etc., R⁴ does not exist when Y is O but when Y is N, R⁴ is selected from the group consisting of hydrogen, alkyl group, aryl group, arylalkyl group, and alkylaryl group having 1 to 20 carbon atoms and may contain substituents which do not interfere with polymerization such as hydroxy, amino, ester, acid, acyloxy, amide, nitrile, halogen, alkoxy, etc., and Z is a radical center connected to structure (1) or (2) below.

Other vinyl monomers which can also be used to introduce the interactive cyclic amide groups are represented by formula 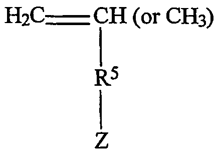 where R⁵ is selected from the group consisting of alkyl group, aryl group, arylalkyl group, and alkylaryl group having 0 to 20 carbon atoms and may contain substituents which do not interfere with polymerization such as hydroxy, amino, ester, acid, acyloxy, amide, nitrile, halogen, alkoxy, etc., and Z is a radical center connected to structure (1) or (2) below. The most useful example is N-vinyl-2-pyrrolidinone.

Structures (1) and (2), respectively, are represented by 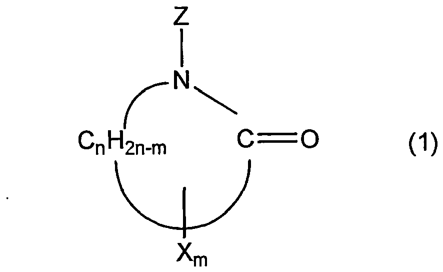 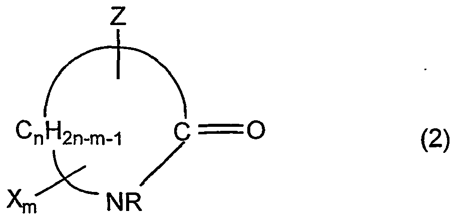 where n = 3-7, preferably 3-5, m = 0-3, X is a substituent on the cyclic structure and may be selected from the group consisting of alkyl group, aryl group, arylalkyl group, and alkylaryl group having 1 to 20 carbon atoms, and may contain substituents which do not interfere with polymerization such as hydroxy, amino, ester, acid, acyloxy, amide, nitrile, halogen, alkoxy, etc., R is selected from the group consisting of hydrogen, alkyl group, aryl group, arylalkyl group, and alkylaryl group having 1 to 20 carbon atoms, and may contain substituents which do not interfere with polymerization such as hydroxy, amino, ester, acid, acyloxy, amide, nitrile, halogen, alkoxy, etc., and Z is a radical center connected to the vinyl monomer structures referenced above.

Useful urea functional monomers which can be used to introduce interactive/H-bonding urea groups into the polymer include acrylates, methacrylates, acrylamides, methacrylamides and other vinyl monomers containing either a cyclic or a linear/acyclic urea group.

The urea-containing acrylate, methacrylate, acrylamide, and methacrylamide monomers are represented by the general formula of 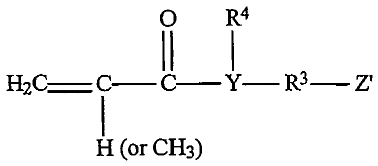 where Y, R³ and R⁴ are as described above, and Z' is a radical center connected to structure (3) for a linear or acyclic urea group, or (4) or (5) below for a cyclic urea group.

Other vinyl monomers which can also be used to introduce either acyclic or cyclic urea group are represented by the general formula of 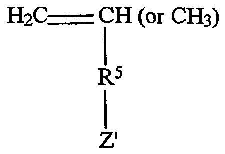 where R⁵ is as described above, and Z' is a radical center connected to structure (3) for a linear or acyclic urea group, or (4) or (5) for a cyclic urea group.

Structure (3), (4), and (5), respectively, are represented by 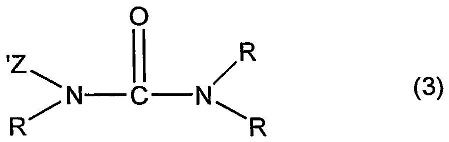 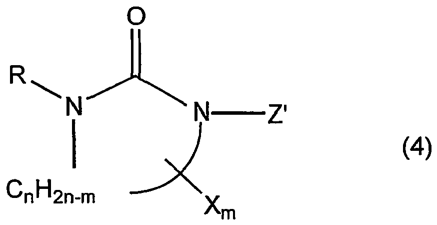 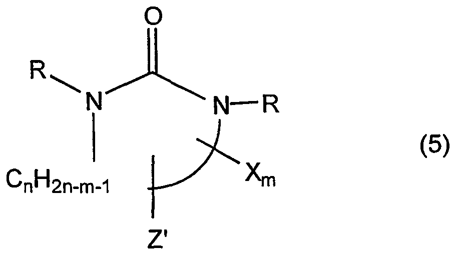 where n = 0-5, preferably 2-5, m = 0-3, X is a substituent on the cyclic structure and may be selected from the group consisting of alkyl group, aryl group, arylalkyl group, alkylaryl group, and heterocyclic group having 1 to 20 carbon atoms, and may contain substituents which do not interfere with polymerization such as hydroxy, amino, ester, acid, acyloxy, amide, nitrile, halogen, alkoxy, etc., each R is independently selected from the group consisting of hydrogen, alkyl group, aryl group, arylalkyl group, alkylaryl group, and heterocyclic group having 1 to 20 carbon atoms, and may contain substituents which do not interfere with polymerization such as hydroxy, amino, ester, acid, acyloxy, amide, nitrile, halogen, alkoxy, etc., and Z' is a radical center connected to the vinyl monomer structures referenced above. Examples of the heterocyclic group include triazole, triazine, imidazole, piperazine, pyridine, pyrimidine, and the like. The cyclic urea structure may also contain other heteroatoms such as O, S, N(R), or groups such as C(O), S(O)₂ or unsaturated double bonds, especially when n is 0 or 1. Examples of such structures include urazole, uracil, cytosine, and thymine.

Typical examples of ethylenically unsaturated urea containing monomers are described in U.S. 5,030,726 and 5,045,616, hereby incorporated by reference. Preferred monomers are the acrylate, methacrylate, acrylamide or methacrylamide derivatives of 2-hydroxyethylene urea (HEEU), or 2-aminoethylethylene urea (AEEU). The most preferred monomers of this type that are commercially available include N-(2-methacryloyloxyethyl)ethylene urea and methacrylamidoethylethylene urea. Other examples of urea containing monomers can be obtained by reacting an ethylenically unsaturated monomer having an isocyanato group such as dimethyl m-isopropenylbenzyl isocyanate (m-TMI) or 2-isocyanatoethyl methacrylate (ICEMA) with a hydroxyl or amino compound having a linear or a cyclic urea group such as HEEU or AEEU. In these examples the urea group is linked to the monomer through a urethane or another urea group. Vinyl ureas can also be used.

The ethylene oxide groups are capable of H-bonding with other functional groups that are also desirable for the polymer of this invention such as carboxylic acid. They can be conveniently introduced with the monomers of the general formula of

CH₂=C(R⁶) (C(O)OXₙ(CH₂CH₂O)ₘ)-R⁷

wherein n= 0 or 1; when n= 1, X is an alkyl, aryl, or alkaryl diradical connecting group of 1-10 carbon atoms; m= 2-100, R⁶ is H or CH₃, and R⁷ is an alkyl group of 1 - 10 carbon atoms. Useful examples of such comonomers include 2-(2-methoxyethoxy)ethyl acrylate, 2-(2-methoxyethoxy)ethyl methacrylate, ethoxytriethyleneglycol methacrylate, methoxy polyethyleneglycol (molecular weight of 200-1000) monomethacrylate, polyethyleneglycol (molecular weight 200-1000) monomethacrylate.

If desired, to increase the degree of branching of the polymer, a low level of difunctional monomers may be included in the backbone composition. The level has to be kept low enough to avoid extensive crosslinking or formation of insoluble gel. Examples of such monomers include 1,4 butanediol diacrylate, 1,4-butanediol dimethacrylate, ethyleneglycol dimethacrylate, triethyleneglycol dimethacrylate, neopentylglycol diacrylate, neopentylglycol dimethacrylate, and the like.

As indicated above, the choice of monomers and monomer mixtures for each segment and the backbone, the segment size, overall ratios of monomers used to form the segmented arms and the backbone, and molecular weights, and nature of each segment and the backbone will vary so as to provide the particular attribute desired for a particular application.

Particularly useful graft copolymers include the following:
a graft acrylic polymer having a backbone of polymerized (meth)acrylate monomers, styrene monomers, (meth)acrylic acid monomers, and hydroxy-functional (meth)acrylate, and branches of polymerized macromonomers having a weight average molecular weight of about 1,000-40,000 and containing two segments, an outer segment of polymerized meth(acrylic acid) and hydroxy alkyl (meth)acrylate monomers, and an inner segment of non-functional alkyl (meth)acrylates. One particularly useful polymer comprises a backbone of polymerized methyl methacrylate, hydroxy ethyl acrylate, acrylic acid, and butyl acrylate and the segmented macromonomer chain comprises polymerized methacrylic acid, polyethyleneglycol methacrylate and hydroxy ethyl methacrylate in the outer segment and polymerized butyl methacrylate and methyl methacrylate in the inner segment.

The coating composition can contain as part of the binder, in the range of about 1 to 80% by weight, preferably about 5 to 60%, and even more preferably in the range of about 10 to 40% by weight of this CAB replacement polymer, all weight percentages being based on the total weight of the binder.

### Other Binder Materials

In addition to the segmented graft copolymer described above, the coating composition can also include, as part of the binder, 20 to 99% by weight, preferably in the range of 40 to 95%, and even more preferably from 60 to 90% by weight of an acrylic polymer, polyester, alkyd resin, acrylic alkyd resin, cellulose acetate butyrate, an iminated acrylic polymer, ethylene vinyl acetate co-polymer, nitrocellulose, plasticizer or a combination thereof, all weight percentages being based on the total weight of the binder.

Useful acrylic polymers are conventionally polymerized from a monomer mixture that can include one or more of the following monomers: an alkyl acrylate; an alkyl methacrylate; a hydroxy alkyl acrylate, a hydroxy alkyl methacrylate; acrylic acid; methacrylic acid; styrene; alkyl amino alkyl acrylate; and alkyl amino alkyl methacrylate, and mixtures thereof; and one or more of the following drying oils: vinyl oxazoline drying oil esters of linseed oil fatty acids, tall oil fatty acids, and tung oil fatty acids.

Suitable iminiated acrylic polymers can be obtained by reacting acrylic polymers having carboxyl groups with propylene imine.

Useful polyesters include the esterification product of an aliphatic or aromatic dicarboxylic acid, a polyol, a diol, an aromatic or aliphatic cyclic anhydride and a cyclic alcohol. One such polyester is the esterification product of adipic acid, trimethylol propane, hexanediol, hexahydrophathalic anhydride and cyclohexane dimethylol.

Other polyesters that are useful in the present invention are branched copolyester polyols. One particularly preferred branched polyester polyol is the esterification product of dimethylolpropionic acid, pentaerythritol and epsilon-caprolactone. These branched copolyester polyols and the preparation thereof are further described in WO 03/070843 published August 28, 2003, which is hereby incorporated by reference.

Suitable cellulose acetate butyrates are supplied by Eastman Chemical Co., Kingsport, Tennessee under the trade names CAB-381-20 and CAB-531-1 and are preferably used in an amount of 0.1 to 20% by weight based on the weight of the binder.

A suitable ethylene-vinyl acetate co-polymer (wax) is supplied by Honeywell Specialty Chemicals - Wax and Additives, Morristown, New Jersey, under the trade name A-C 405 (T) Ethylene - Vinyl Acetate Copolymer.

Suitable nitrocellulose resins preferably have a viscosity of about 1/2-6 seconds. Preferably, a blend of nitrocellulose resins is used. Optionally, the lacquer can contain ester gum and castor oil.

Suitable alkyd resins are the esterification products of a drying oil fatty acid, such as linseed oil and tall oil fatty acid, dehydrated castor oil, a polyhydric alcohol, a dicarboxylic acid and an aromatic monocarboxylic acid. One preferred alkyd resin is a reaction product of an acrylic polymer and an alkyd resin.

Suitable plasticizers include butyl benzyl phthalate, dibutyl phthalate, triphenyl phosphate, 2-ethylhexylbenzyl phthalate, dicyclohexyl phthalate, diallyl toluene phthalate, dibenzyl phthalate, butylcyclohexyl phthalate, mixed benzoic acid and fatty oil acid esters of pentaerythritol, poly(propylene adipate) dibenzoate, diethylene glycol dibenzoate, tetrabutylthiodisuccinate, butyl phthalyl butyl glycolate, acetyltributyl citrate, dibenzyl sebacate, tricresyl phosphate, toluene ethyl sulfonamide, the di-2-ethyl hexyl ester of hexamethylene diphthalate, and di(methyl cyclohexyl) phthalate. One preferred plasticizer of this group is butyl benzyl phthalate.

If desired, the lacquer can include organometallic driers, chelating agents, or a combination thereof. Suitable organometallic driers include cobalt naphthenate, copper naphthenate, lead tallate, calcium naphthenate, iron naphthenate, lithium naphthenate, lead naphthenate, nickel octoate, zirconium octoate, cobalt octaoate, iron octoate, zinc octoate, and alkyl tin dilaurates, such as dibutyl tin dilaurate. Suitable chelating agents include aluminum monoisopropoxide monoversatate, aluminum (monoiospropyl)phthalate, aluminum diethoxyethoxide monoversatate, aluminum trisecondary butoxide, aluminum diisopropoxide monoacetacetic ester chelate and aluminum isopropoxide.

If the lacquer is to be used as a clearcoat for the exterior of automobiles and trucks, about 0.1 to 5% by weight, based on the weight of the total weight of the binder, of an ultraviolet light stabilizer or a combination of ultraviolet light stabilizers and absorbers can be added to improve the weatherability of the composition. These stabilizers include ultraviolet light absorbers, screeners, quenchers and specific hindered amine light stabilizers. Also, about 0.1 to 5% by weight, based on the total weight of the binder, of an antioxidant can be added. Most of the foregoing stabilizers are supplied by Ciba Specialty Chemicals, Tarrytown, New York.

Additional details of the foregoing additives are provided in US Patents 3,585,160, 4,242,243, 4,692,481, and US Re 31,309.

### Pigments

If desired, the composition can be pigmented to form a colored mono coat, basecoat, primer or primer surfacer, Generally, pigments are used in a pigment to binder weight ratio (P/B) of 0.1/100 to 200/100; preferably, for base coats in a P/B of1/100 to 50/100. If used as primer or primer surfacer higher levels of pigment are used, e.g., 50/100 to 200/100. The pigments can be added using conventional techniques, such as sand-grinding, ball milling, attritor grinding, two roll milling to disperse the pigments. The mill base is blended with the film-forming constituents.

Any of the conventional pigments used in coating compositions can be utilized in the composition such as the following: metallic oxides, metal hydroxide, metal flakes, chromates, such as lead chromate, sulfides, sulfates, carbonates, carbon black, silica, talc, china clay, phthalocyanine blues and greens, organo reds, organo maroons, pearlescent pigments and other organic pigments and dyes. If desired, chromate-free pigments, such as barium metaborate, zinc phosphate, aluminum triphosphate and mixtures thereof, can also be used.

Suitable flake pigments include bright aluminum flake, extremely fine aluminum flake, medium particle size aluminum flake, and bright medium coarse aluminum flake; mica flake coated with titanium dioxide pigment also known as pearl pigments. Suitable colored pigments include titanium dioxide, zinc oxide, iron oxide, carbon black, mono azo red toner, red iron oxide, quinacridone maroon, transparent red oxide, dioxazine carbazole violet, iron blue, indanthrone blue, chrome titanate, titanium yellow, mono azo permanent orange, ferrite yellow, mono azo benzimidazolone yellow, transparent yellow oxide, isoindoline yellow, tetrachloroisoindoline yellow, anthanthrone orange, lead chromate yellow, phthalocyanine green, quinacridone red, perylene maroon, quinacridone violet, pre-darkened chrome yellow, thio-indigo red, transparent red oxide chip, molybdate orange, and molybdate orange red.

### Liquid Carrier

The lacquer of the present invention can further, and typically does, contain at least one volatile organic solvent as the liquid carrier to disperse and/or dilute the above ingredients and form a coating composition having the desired properties. The solvent or solvent blends are typically selected from the group consisting of aromatic hydrocarbons, such as, petroleum naphtha or xylenes; ketones, such as, methyl amyl ketone, methyl isobutyl ketone, methyl ethyl ketone or acetone; esters, such as butyl acetate or hexyl acetate; glycol ether esters, such as, propylene glycol monomethyl ether acetate; and alcohols, such as isopropanol and butanol. The amount of organic solvent added depends upon the desired solids level, desired rheological (e.g., spray) properties, as well as the desired amount of VOC of the lacquer.

The total solids level of the coating of the present invention can vary in the range of from 5 to 95%, preferably in the range of from 7 to 80% and more preferably in the range of from 10 to 60%, all percentages being based on the total weight of the coating composition.

### Optional Crosslinking Component

If the composition is used as a clear coating composition, a crosslinking component is generally known to provide the improved level of durability and weatherability required for automotive and truck topcoats. Typically, polyisocyanates are used as the crosslinking agents. Suitable polyisocyanate has on average 2 to 10, alternately 2.5 to 8 and further alternately 3 to 8 isocyanate functionalities. Typically the coating composition has, in the binder, a ratio of isocyanate groups on the polyisocyanate in the crosslinking component to crosslinkable groups (e.g., hydroxyl and/or amine groups) of the branched acrylic polymer ranges from 0.25/1 to 3/1, alternately from 0.8/1 to 2/1, further alternately from 1/1 to 1.8/l.

Examples of suitable polyisocyanates include any of the conventionally used aromatic, aliphatic or cycloaliphatic di-, tri- or tetra-isocyanates, including polyisocyanates having isocyanurate structural units, such as, the isocyanurate of hexamethylene diisocyanate and isocyanurate of isophorone diisocyanate; the adduct of 2 molecules of a diisocyanate, such as, hexamethylene diisocyanate, uretidiones of hexamethylene diisocyanate; uretidiones of isophorone diisocyanate or isophorone diisocyanate; isocyanurate of meta-tetramethylxylylene diisocyanate; and a diol such as, ethylene glycol; the adduct of 3 molecules of hexamethylene diisocyanate and 1 molecule of water (available under the trademark Desmodur^{®} N from Bayer Corporation of Pittsburgh, Pennsylvania); the adduct of 1 molecule of trimethylol propane and 3 molecules of toluene diisocyanate (available under the trademark Desmodur^{®} L from Bayer Corporation ); the adduct of 1 molecule of trimethylol propane and 3 molecules of isophorone diisocyanate or compounds, such as 1,3,5-triisocyanato benzene and 2,4,6-triisocyanatotoluene; and the adduct of 1 molecule of pentaerythritol and 4 molecules of toluene diisocyanate.

The coating composition containing a crosslinking component preferably includes one or more catalysts to enhance crosslinking of the components on curing. Generally, the coating composition includes in the range of from 0.01 to 5% by weight, based on the total weight of the binder.

Suitable catalysts for polyisocyanate can include one or more tin compounds, tertiary amines or a combination thereof. Suitable tin compounds include dibutyl tin dilaurate, dibutyl tin diacetate, stannous octoate, and dibutyl tin oxide. Dibutyl tin dilaurate is preferred. Suitable tertiary amines include triethylene diamine. One commercially available catalyst that can be used is Fastcat^{®} 4202 dibutyl tin dilaurate sold by Elf-Atochem North America, Inc. Philadelphia, pennsylvania, Carboxylic acids, such as acetic acid, may be used in conjunction with the above catalysts to improve the viscosity stability of two component coatings.

### Application

In use, a layer of the composition is typically applied to a substrate by conventional techniques, such as, spraying, electrostatic spraying, roller coating, dipping or brushing. Spraying and electrostatic spraying are preferred application methods. When used as a pigmented coating composition, e.g., as a basecoat or a pigmented top coat, the coating thickness can range from 10 to 85 micrometers, preferably from 12 to 50 micrometers and when used as a primer, the coating thickness can range from 10 to 200 micrometers, preferably from 12 to 100 micrometers. When used as a clear coating, the thickness is in the range of from 25 micrometers to 100 micrometers. The coating composition can be dried at ambient temperatures or can be dried upon application for about 2 to 60 minutes at elevated drying temperatures ranging from about 50°C to 100°C.

In a typical clearcoat/basecoat application, a layer of conventional clear coating composition is applied over the basecoat of the novel composition of this invention by the above conventional techniques, such as, spraying or electrostatic spraying. Generally, a layer of the basecoat is flashed for 1 minute to two hours under ambient or elevated temperatures before the application of the clear coating composition or dried at elevated temperatures shown above. Suitable clear coating compositions can include two-pack isocyanate crosslinked compositions, such as 72200S ChromaPremier^{®} Productive Clear blended with an activator, such as 12305S ChromaPremier^{®} Activator, or 3480S Low VOC Clear composition activated with 194S Imron Select^{®} Activator. Isocyanate free crosslinked clear coating compositions, such as 1780S Iso-Free Clearcoat activated with 1782S Converter and blended with 1775S Mid-Temp Reducer are also suitable. Suitable clear lacquers can include 480S Low VOC Ready to Spray Clear composition. All the foregoing clear coating compositions are supplied by DuPont (E.I. Dupont de Nemours and Company, Wilmington, DE).

If the coating composition contains a crosslinking agent, such as a polyisocyanate, the coating composition can be supplied in the form of a two-pack coating composition in which the first-pack includes the branched acrylic polymer and the second pack includes the crosslinking component, e.g., a polyisocyanate. Generally, the first and the second packs are stored in separate containers and mixed before use. The containers are preferably sealed air tight to prevent degradation during storage, The mixing may be done, for example, in a mixing nozzle or in a container. When the crosslinking component contains, e.g., a polyisocyanate, the curing step can take place under ambient conditions, or if desired, it can take place at elevated baking temperatures.

For a two pack coating composition, the two packs are mixed just prior to use or 5 to 30 minutes before use to form a potmix. A layer of the potmix is typically applied to a substrate by the above conventional techniques. If used as a clear coating, a layer is applied over a metal substrate, such as, automotive body, which is often pre-coated with other coating layers, such as, an electrocoat primer, primer surfacer and a basecoat. The two-pack coating composition may be dried and cured at ambient temperatures or may be baked upon application for 10 to 60 minutes at baking temperatures ranging from 80°C to 160°C. The mixture can also contain pigments and can be applied as a mono coat or a basecoat layer over a primed substrate or as a primer layer.

The coating composition is suitable for providing coatings on variety of substrates. Typical substrates, which may or may not be previously primed or sealed, for applying the coating composition of the present invention include automobile bodies, any and all items manufactured and painted by automobile sub-suppliers, frame rails, commercial trucks and truck bodies, including but not limited to beverage bottles, utility bodies, ready mix concrete delivery vehicle bodies, waste hauling vehicle bodies, and fire and emergency vehicle bodies, as well as any potential attachments or components to such truck bodies, buses, farm and construction equipment, truck caps and covers, commercial trailers, consumer trailers, recreational vehicles, including but not limited to, motor homes, campers, conversion vans, vans, pleasure vehicles, pleasure craft snow mobiles, all terrain vehicles, personal watercraft, motorcycles, bicycles, boats, and aircraft. The substrate further includes industrial and commercial new construction and maintenance thereof; cement and wood floors; walls of commercial and residential structures, such office buildings and homes; amusement park equipment; concrete surfaces, such as parking lots and drive ways; asphalt and concrete road surface, wood substrates, marine surfaces; outdoor structures, such as bridges, towers; coil coating; railroad cars; printed circuit boards; machinery; OEM tools; signage; fiberglass structures; sporting goods; golf balls; and sporting equipment.

The compositions are also suitable as clear or pigmented coatings in industrial and maintenance coating applications.

These and other features and advantages of the present invention will be more readily understood, by those of ordinary skill in the art from the following examples.

The following Examples illustrate the invention. All parts and percentages are on a weight basis unless otherwise noted.

### RESIN EXAMPLES

The following graft copolymers with segmented aims were prepared and used to form lacquer coating compositions.

### EXAMPLE 1

### Preparation of MAA/HEMA/ETEGMA Macromonomer, 60/20/20 % by weight

This example illustrates the preparation of a macromonomer with carboxyl groups and primary hydroxyl groups that are capable of forming hydrogen bonds and can be used to form the A segment (outer segment) of a segmented arm for a graft copolymer of this invention. A 5-liter flask was equipped with a thermometer, stirrer, additional funnels, heating mantel, reflux condenser and a means of maintaining a nitrogen blanket over the reactants. The flask was held under nitrogen positive pressure and the following ingredients were employed.

| Portion 1 | Weight (gram) |
|---|---|
| Methyl ethyl ketone | 850.0 |
| Isopropanol | 990.0 |

| Portion 2 | |
|---|---|
| Diaquabis(borondifluorodiphenyl glyoximato) cobaltate (II), | 0.48 |
| Co(DPG-BF₂) | |
| Acetone | 106.4 |

| Portion 3 | |
|---|---|
| 2,2'-Azobis(methylbutyronitrile) (Vazo® 67 by DuPont Co., | 21.6 |
| Wilmington, DE) | |
| Methyl ethyl ketone | 260.0 |

| Portion 4 | |
|---|---|
| Methacrylic acid (MAA) | 720.0 |
| 2-Hydroxyethyl methacrylate (HEMA) | 240.0 |
| Ethoxy triethyleneglycol methacrylate (ETEGMA) | 240.0 |
| Total | 3428.48 |

Portion 1 mixture was charged to the flask and the mixture was heated to reflux temperature and refluxed for about 20 minutes. Portion 2 was prepared by dissolving the cobalt catalyst completely. Portion 3 was added to Portion 2 and agitated to dissolve the initiator. The mixture of Portion 2 and Portion 3 was fed to the flask over 210 minutes while Portion 4 was simultaneously fed to the flask over 180 minutes, and the reaction mixture was held at reflux temperature throughout the course of additions. Reflux was continued for another 1.5 hours and the solution was cooled to room temperature and filled out. The resulting macromonomer solution was a light yellow clear polymer solution and had a solid content of about 36.2% and a Gardner-Holtz viscosity of P. The macromonomer had a 6,390 Mw and 3,805 Mn after the carboxyl groups were protected by methyl groups to facilitate the GPC analysis.

### EXAMPLE 2

### Preparation of an AB segmented macromonomer BMA/MMA//MAA/HEMA/ETEGMA. 45/30//15/5/5 % by weight

This example shows the preparation of a segmented macromonomer where the B segment (inner segment) has no specific functional groups and the A segment (outer segment) contains carboxyl groups and primary hydroxyl groups from the macromonomer prepared above. It can be used to form a segmented arm of a graft copolymer of this invention.

A 5-liter flask was equipped as in Example 1. The flask was held under nitrogen positive pressure and the following ingredients were employed.

| Portion 1 | Weight (gram) |
|---|---|
| Macromonomer of Example 1 | 1257.15 |
| Isopropanol | 614.8 |

| Portion 2 | |
|---|---|
| Methyl methacrylate (MMA) | 528.0 |
| Butyl methacrylate (BMA) | 792.0 |

| Portion 3 | |
|---|---|
| t-Butyl peroctoate (Elf Atochem North America, Inc., | 28.0 |
| Philadelphia, PA) | |
| Ethyl acetate | 300.0 |
| Total | 3519.95 |

Portion 1 mixture was charged to the flask and the mixture was heated to reflux temperature and refluxed for about 10 minutes. Portion 2 was added over 3 hours and Portion 3 was simultaneously added over 3.5 hours while the reaction mixture was held at reflux temperature. The reaction mixture was refluxed for another 1.5 hours. After cooling, the resulting macromonomer solution was a clear polymer solution and had a solid content of about 51.3% and a Gardner-Holtz viscosity of Y+1/2. The macromonomer had a 20,027 Mw and 8,578 Mn after the carboxyl groups were protected by methyl groups to facilitate the GPC analysis.

### EXAMPLE 3

### Preparation of a Graft Copolymer with Segmented Arms

This example shows the preparation of a graft copolymer of this invention containing carboxyl groups and primary hydroxyl groups on the backbone and the A segment of the arm, and no specific functional groups on the B segment of the segmented arm, specifically methyl methacrylate-co-butyl acrylate-co-hydroxyethyl acrylate-*co-*acrylic acid-g-butyl methacrylate-co-methyl methacrylate-b-methacrylic acid-co-hydroxyethyl methacrylate-co-ethoxytriethyleneglycol methacrylate, 32/22/7/4//15.75/10.50//5.25/1.75/1.75 % by weight, from a macromonomer prepared above.

A 12-liter flask was equipped as in Example 1. The flask was held under nitrogen positive pressure and the following ingredients were employed.

| Portion 1 | Weight (gram) |
|---|---|
| Macromonomer of Example 2 | 2716.56 |
| Ethyl acetate | 1108.8 |

| Portion 2 | |
|---|---|
| Methyl methacrylate (MMA) | 1241.86 |
| Butyl acrylate (BA) | 853.78 |
| 2-Hydroxyethyl acrylate (HEA) | 271.66 |
| Acrylic acid (AA) | 155.23 |

| Portion 3 | |
|---|---|
| t-Butyl peroctoate (Elf Atochem North America, Inc., | 52.98 |
| Philadelphia, PA) | |
| Ethyl acetate | 1232.0 |

| Portion 4 | |
|---|---|
| t-Butyl peroctoate (Elf Atochem North America, Inc., | 5.30 |
| Philadelphia, PA) | |
| Ethyl acetate | 123.2 |
| Total | 7761.37 |

Portion 1 mixture was charged to the flask and the mixture was heated to reflux temperature and refluxed for about 10 minutes. Portion 2 and 3 were simultaneously added over 3 hours while the reaction mixture was held at reflux temperature. The reaction mixture was refluxed for 30 minutes. Portion 4 was added over 5 minutes, and the reaction mixture was refluxed for another 2 hours. After cooling, the resulting graft copolymer solution was clear and had a solid content of about 49.7% and a Gardner-Holtz viscosity of Y+1/2. The graft copolymer had a 42,784 Mw and 15,123 Mn, and a Tg of 42.7C measured by Differential Scanning Calorimetry.

### EXAMPLE 4

### Preparation of a Graft Copolymer with Segmented Arms

This example shows the preparation of a graft copolymer of this invention containing urea groups and primary hydroxyl groups on the backbone, carboxyl groups and primary hydroxyl groups on the A segment of the arm, and no specific functional groups on the B segment of the segmented arm, specifically methyl methacrylate-co-N-(2-methacryloyloxyethyl)ethylene urea-co-butyl acrylate-co-hydroxyethyl acrylate-g-butyl methacrylate-co-methyl methacrylate-b-methacrylic acid-co-hydroxyethyl methacrylate-co-ethoxytriethyleneglycol methacrylate, 32/5/20/8//15.75/10.50//5.25/1.75/1.75% by weight, from a macromonomer prepared above.

A 2-liter flask was equipped as in Example 1. The flask was held under nitrogen positive pressure and the following ingredients were employed.

| Portion 1 | Weight (gram) |
|---|---|
| Macromonomer of Example 2 | 441.0 |
| Isopropanol | 88.1 |

| Portion 2 | |
|---|---|
| Methyl methacrylate (MMA) | 107.1 |
| Butyl acrylate (BA) | 126.0 |
| Rohamere 6844-0 (25% N-(2-methacryloyloxyethyl)ethylene urea in MMA, Rohm Tech Inc., Malden, MA) | 126.0 |
| 2-Hydroxyethyl acrylate (HEA) | 50.4 |

| Portion 3 | |
|---|---|
| t-Butyl peroctoate (Elf Atochem North America, Inc., Philadelphia, PA) | 8.0 |
| Ethyl acetate | 180.0 |

| Portion 4 | |
|---|---|
| t-Butyl peroctoate (Elf Atochem North America, Inc., Philadelphia, PA) | 0.8 |
| Ethyl acetate | 18.0 |

| Portion 5 | |
|---|---|
| Ethyl acetate | 114.6 |
| Total | 1260.0 |

Portion 1 mixture was charged to the flask and the mixture was heated to reflux temperature and refluxed for about 10 minutes. Portion 2 and 3 were simultaneously added over 3 hours while the reaction mixture was held at reflux temperature. The reaction mixture was refluxed for 30 minutes. Portion 4 was added over 5 minutes, and the reaction mixture was refluxed for another 2 hours. Portion 5 was added. After cooling, the resulting graft copolymer solution was clear and had a solid content of about 49.5% and a Gardner-Holtz viscosity of X+1/2. The graft copolymer had a 41,923 Mw and 14,499 Mn, and a Tg of 46.5C measured by Differential Scanning Calorimetry.

### EXAMPLE 5

### Preparation of MAA/HEMA/ETEGMA Macromonomer, 60/20/20 % by weight

This example illustrates the preparation of a macromonomer having the same composition as that of Example 1 at a lower molecular weight. A 5-liter flask was equipped as in Example 1. The flask was held under nitrogen positive pressure and the following ingredients were employed.

| Portion 1 | Weight (gram) |
|---|---|
| Methyl ethyl ketone | 826.0 |
| Isopropanol | 900.0 |

| Portion 2 | |
|---|---|
| Diaquabis(borondifluorodiphenyl glyoximato) cobaltate (II), Co(DPG-BF₂) | 0.84 |
| Acetone | 88.0 |

| Portion 3 | |
|---|---|
| 2,2'-Azobis(methylbutyronitrile) (Vazo® 67 by DuPont Co., Wilmington, DE) | 25.2 |
| Methyl ethyl ketone | 260.0 |

| Portion 4 | |
|---|---|
| Methacrylic acid (MAA) | 840.0 |
| 2-Hydroxyethyl methacrylate (HEMA) | 280.0 |
| Ethoxy triethyleneglycol methacrylate (ETEGMA) | 280.0 |
| Total | 3500.04 |

The procedure of Example 1 was repeated. The resulting macromonomer solution was a light yellow clear polymer solution and had a solid content of about 39.0% and a Gardner-Holtz viscosity of U. The macromonomer had a 4,221 Mw and 2,708 Mn after the carboxyl groups were protected by methyl groups to facilitate the GPC analysis.

### EXAMPLE 6

### Preparation of an AB segmented macromonomer BMA/MMA//MAA/HEMA/ETEGMA, 45/30//15/5/5 % by weight

This example shows the preparation of a segmented macromonomer having the same composition as that of Example 2 at lower molecular weight. A 5-liter flask was equipped as in Example 1. The flask was held under nitrogen positive pressure and the following ingredients were employed.

| Portion 1 | Weight (gram) |
|---|---|
| Macromonomer of Example 5 | 1081.0 |
| Ethyl acetate | 196.5 |
| Isopropanol | 288.0 |

| Portion 2 | |
|---|---|
| Methyl methacrylate (MMA) | 519.0 |
| Butyl methacrylate (BMA) | 778.0 |

| Portion 3 | |
|---|---|
| t-Butyl peroctoate (Elf Atochem North America, Inc., Philadelphia, PA) | 27.52 |
| Ethyl acetate | 255.0 |
| Total | 3145.02 |

The procedure of Example 2 was repeated. The resulting macromonomer solution was a clear polymer solution and had a solid content of about 54.1% and a Gardner-Holtz viscosity of Z4-1/4. The macromonomer had a 14,321 Mw and 6,494 Mn after the carboxyl groups were protected by methyl groups to facilitate the GPC analysis.

### EXAMPLE 7

### Preparation of a Graft Copolymer with Segmented Arms

This example shows the preparation of a graft copolymer of this invention containing carboxyl groups and primary hydroxyl groups on the A segment of the arm, no specific functional groups on the B segment of the segmented arm, and a low level of difunctional monomer on the backbone to increase the degree of branching, specifically butyl acrylate-isobornyl acrylate-*co*-1,4-butanediol diacrylate-g-butyl methacrylate-co-methyl methacrylate-*b*-methacrylic acid-*co*-hydroxyethyl methacrylate-*co-*ethoxytriethyleneglycol methacrylate, 24/20/6//22.5/15.0//7.5/2.5/2.5% by weight, from a macromonomer prepared above.

A 2-liter flask was equipped as in Example 1. The flask was held under nitrogen positive pressure and the following ingredients were employed.

| Portion 1 | Weight (gram) |
|---|---|
| Macromonomer of Example 6 | 491.0 |
| Ethyl acetate | 61.4 |
| Isopropanol | 180.0 |

| Portion 2 | |
|---|---|
| Butyl acrylate (BA) | 129.6 |
| Isobornyl acrylate (IBOA) | 108.0 |
| 1,4-butanediol diacrylate | 32.4 |

| Portion 3 | |
|---|---|
| t-Butyl peroctoate (Elf Atochem North America, Inc., Philadelphia, PA) | 6.75 |
| Ethyl acetate | 158.0 |

| Portion 4 | |
|---|---|
| t-Butyl peroctoate (Elf Atochem North America, Inc., Philadelphia, PA) | 1.35 |
| Ethyl acetate | 31.6 |
| Total | 1200.1 |

The procedure of Example 3 was repeated. The resulting graft copolymer solution was clear and had a solid content of about 45.4% and a Gardner-Holtz viscosity of P. The graft copolymer had a broad distribution of molecular weight with 70,806 Mw and 9,525 Mn, and a Tg of 22.6C measured by Differential Scanning Calorimetry.

### PAINT EXAMPLES

### PAINT EXAMPLE 1

The following premixes were made and used to form the paint formulations reported below:
Solvent Blend A was prepared by mixing together 70/30 by weight of n-butyl acetate/methyl amyl ketone.

The following were blended together with an air mixer to make Premix B:

| **Component** | **Wt (grams)** |
|---|---|
| Silberline Mfg Co, Inc. Aluminum Paste E-588-AR | 919.85 |
| Acrylic resin (50.7 % wt solids)* | 108.70 |
| Acrylic resin** | 332.18 |
| Hyperbranched polyester resin (65% wt solids)*** | 2122.23 |
| Solvent Blend A | 1417.03 |
| **Total** | **4899.99** |

| | |
|---|---|
| Table Footnote * A graft acrylic copolymer was prepared in accordance with the procedure described in Example 6 of US Patent No. 6,472,463 but using methyl toluene sulfonate versus benzyl chloride. ** A random acrylic copolymer Sty/IBOMA/EHA/HEMA/BMA/MMA (10/10/15/30/10/25% by weight) at 66.40% wt solids in n-butyl acetate was prepared with the standard free radical polymerization procedure. *** The hyperbranched polyester polyol was prepared in accordance with the procedure described in Resin Solution 5 of WO 03/070843 published August 28, 2003 at page 23, line 21 to page 24, line 19 but made in methyl amyl ketone as the solvent versus propylene glycol monomethyl ether acetate. | |

A CAB (cellulose acetate butyrate) Blend C was prepared with vigorous agitation on an air mixer as follows:

| **Component** | **Wt (grams)** |
|---|---|
| Solvent Blend A | 11544.43 |
| Eastman Chemical Co. CAB-381-20 | 1530.10 |
| Eastman Chemical Co. CAB-531-1 | 526.35 |
| **Total** | **13600.88** |

Using the premixes prepared above, various basecoat paint formulations were then prepared. Silver basecoats of this invention (BC1 to BC8) along with the comparative examples (C1 to C3) were prepared per the formulas below using an air mixer to incorporate the materials:

**Weight (grams)**

| Component | C1 | C2 | C3 | BC1 | BC2 | BC3 | BC4 | BC5 | BC6 | BC7 | BC8 |
|---|---|---|---|---|---|---|---|---|---|---|---|
| Premix B | 102.53 | 102.85 | 103.17 | 108.06 | 108.49 | 108.78 | 109.22 | 107.08 | 107.29 | 107.46 | 107.67 |
| CAB blend C | 115.46 | 115.82 | 116.18 | 121.68 | 122.17 | 0 | 0 | 120.58 | 120.82 | 0 | 0 |
| Graft acrylic of Ex. 3 | 0 | 0 | 0 | 108.01 | 132.54 | 144.97 | 169.82 | 0 | 0 | 0 | 0 |
| Graft acrylic of Ex. 4 | 0 | 0 | 0 | 0 | 0 | 0 | 0 | 108.96 | 133.43 | 145.79 | 170.43 |
| Acrylic resin* | 106.55 | 97.16 | 87.72 | 0 | 0 | 0 | 0 | 0 | 0 | 0 | 0 |
| Wax dispersion** | 0 | 96.75 | 194.10 | 203.29 | 0 | 204.65 | 0 | 201.44 | 0 | 202.16 | 0 |
| Solvent blend A | 275.45 | 187.41 | 98.83 | 58.97 | 236.80 | 141.60 | 320.96 | 61.94 | 238.47 | 144.58 | 321.90 |
| Total | 599.99 | 599.99 | 600.00 | 600.01 | 600.00 | 600.00 | 600.00 | 600.00 | 600.01 | 599.99 | 600.00 |

| | | | | | | | | | | | |
|---|---|---|---|---|---|---|---|---|---|---|---|
| Table Footnotes * A random acrylic copolymer Sty/MMA/IBMA/HEMA (15/20/45/20% by weight) at 59.60% wt solids in xylene/methyl ethyl ketone (85/15) mixture was prepared with the standard free radical polymerization procedure and used in the comparative examples C 1 to C3. ** The wax dispersion was AC® 405-T ethylene vinyl acetate copolymer, 5.986% by wt in a 42.43/57.57 by weight blend of xylene/n-butyl acetate (Honeywell Specialty Chemicals - Wax & Additives). | | | | | | | | | | | |

Below are the Zahn cup viscosity readings on the basecoats (per ASTM-D-1084, Method D):

**Zahn cup Vise. (sec) Unique Composition**

| | | | |
|---|---|---|---|
| C1 | 2 | 21.4 | CAB + random acrylic |
| C2 | 2 | 26.2 | CAB + random acrylic + wax (low conc.) |
| C3 | 3 | 31.5 | CAB + random acrylic + wax |
| BC1 | 3 | 29.8 | CAB + graft acrylic of Example 3 + wax |
| BC2 | 3 | 22.4 | CAB + graft acrylic of Example 3 |
| BC3 | 2 | 24.1 | graft copolymer of Example 3 + wax |
| BC4 | 2 | 20.9 | graft copolymer of Example 3 |
| BC5 | 1 | 23.6 | CAB + graft copolymer of Example 4 + wax |
| BC6 | 1 | 20.9 | CAB + graft copolymer of Example 4 |
| BC7 | 2 | 31.4 | graft copolymer of Example 4 + wax |
| BC8 | 2 | 38.7 | graft copolymer of Example 4 |

All basecoats could be air sprayed, but BC1, BC2, BC5, and BC6 displayed drier spray application. The silver basecoats were sprayed per the application instructions used for DuPont™ ChromaPremier® Basecoat specified in the DuPont ChromaSystem Tech Manual. The basecoats were sprayed to hiding over ACT APR10288 cold rolled steel panels which were wiped with DuPont First Klean 3900S™, sanded with 80 grit sand paper, wiped again with DuPont First Klean 3900S™, then primed with DuPont™ Variprime® 615S™/625S™ Self-Etching Primer as per the instructions in the DuPont ChromaSystem Tech Manual. The basecoats were clearcoated with DuPont™ ChromaClear® V-7500S™ Multi-Use as per the instructions in the DuPont ChromaSystem Tech Manual. Basecoat/clearcoat panels were flashed and then baked in a 140°F oven for 30 minutes. Topcoated panels were allowed to air dry for an additional 7 days prior to testing.

Below are the color readings recorded by a DuPont ChromaVision Custom Color MA 100B meter manufactured by X-Rite, Inc. of Grandville, Michigan:

| | | | | | | | | | | | | **Primer** | **BC** | **CC** |
|---|---|---|---|---|---|---|---|---|---|---|---|---|---|---|
| | **NS** | **NS** | **NS** | **Flat** | **Flat** | **Flat** | **High** | **High** | **High** | | | **FT** | **FT** | **FT** |
| **BC** | **L** | **A** | **B** | **L** | **A** | **B** | **L** | **A** | **B** | **Flop** | **Mottling** | **(mils)** | **(mils)** | **(mils) .** |
| C1 | 76.94 | -0.44 | 0.02 | 66.49 | -0.61 | -0.26 | 51.22 | -0.98 | -0.5 | 1.73 | 3 | 1.0 | 1.2 | 2.2 |
| C2 | 125.72 | 1.15 | 2.68 | 64.06 | -0.04 | 0.25 | 35.56 | -0.84 | -0.65 | 7.22 | 0 | 1.0 | 1.3 | 2.2 |
| C3 | 129.94 | 1.65 | 3.42 | 61.55 | 0.13 | 0.39 | 33.35. | -0.78 | -0.61 | 8.12 | 0 | 1.0 | 1.6 | 2.3 |
| BC1 | 122.65 | 1.06 | 2.43 | 64.18 | 0.02 | 0.55 | 34.8 | -0.82 | 0.76 | 7.00 | 0 | 1.0 | 1.1 | 2.1 |
| BC2 | 124.34 | 1.08 | 2.33 | 63.97 | *-0.05* | 0.43 | 35 | -0.82 | -0.14 | 7.16 | 1 | 1.0 | 1.5 | 2.0 |
| BC3 | 127.97 | 1.32 | 2.69 | 62.05 | 0.13 | 0.45. | 34.18 | -0.74 | -0.56 | 7.79 | 0 | 1.0 | 0.9 | 2.2 |
| BC4 | 125.71 | 1.24 | 2.49 | 63.01 | 0.01 | 0.35 | 35.48 | -0.75 | -0.72 | 7.35 | 0 | 1.0 | 1.1 | 2.0 |
| BC5 | 129.54 | 1.44 | 3.02 | 61.91 | 0.13 | 0.58 | 33.39 | -0.74 | -0.46 | 8.03 | 0 | 0.9 | 0.8 | 2.2 |
| BC6 | 125.03 | 1.19 | 2.48 | 63.04 | 0.06 | 0.66. | 35.06. | -0.81 | 0.22 | 7.32 | 1 | 0.9 | 1.6 | 2.3 |
| BC7 | 126.36 | 1.19 | 2.52 | 62.69 | 0.05 | 0.46 | 34.84 | -0.76 | -0.76 | 7.50 | 0 | 0.9 | 1.1 | 2.3 |
| BC8 | 89.93 | -0.29 | 0.07 | 70.2 | -0.44 | -0.56 | 48.06 | -0.88 | -0.81 | 2.81 | 3 | 0.9 | 1.5 | 2.3 |

| | | | | | | | | | | | | | | |
|---|---|---|---|---|---|---|---|---|---|---|---|---|---|---|
| NS =Near specular Mottling ratings: 0 = none 1 = slight 2 = moderate 3 = severe | | | | | | | | | | | | | | |

The graft copolymer of Example 3 of this invention displayed good flake control even in the absence of CAB and/or wax dispersion, in stark contrast to the poor flake control displayed by the conventional random copolymer in the absence of wax dispersion. The graft copolymer of Example 4 of this invention displayed good flake control in the presence of CAB + wax or wax alone but had poor flake control in the absence of both CAB and wax. Both sets of examples demonstrated that the CAB's could be replaced by the graft copolymers of this invention without adversely affecting the control of the flake orientation for color effects.

The table below shows the results of gravelometer testing per ASTM-D-3170-87 using a 55 degree panel angle, with panels and stones kept in the freezer for a minimum of two hours prior to chipping:

| **Basecoat** | **Rating 1 pt** | **Locus of Failure 1 pt** | **Rating 3 pt** | **Locus of Failure 3 pt** |
|---|---|---|---|---|
| C1 | 6 | BV | 5 | BV |
| C2 | 5 | BV | 5- | BV |
| C3 | 5 | BV | 5 | BV |
| BC1 | 6- | BV | 6 | BV |
| BC2 | 5+ | BV | 5+ | BV |
| BC3 | 6 | BV | 6- | BV |
| BC4 | 5+ | BV | 5 | BV |
| BC5 | 6+ | BV | 6 | BV |
| BC6 | 6 | BV | 5 | BV |
| BC7 | 6+ | BV | 6 | BV |
| BC8 | 7- | BV | 7 | BV |

| | | | | |
|---|---|---|---|---|
| BV = failure between basecoat and Variprime | | | | |

The table below shows the results of gravelometer testing per ASTM-D-3170-87 using a 55 degree panel angle, with panels and stones kept in the freezer for a minimum of two hours prior to chipping (after air drying for 7 days after the 140°F x 30 minute bake, the panels were exposed in a humidity cabinet per ASTM-D-2247-92 at 100% relative humidity for 96 hours):

| **Basecoat** | **Rating 1 pt** | **Locus of Failure 1 pt** | **Rating 3 pt** | **Locus of Failure 3 pt** |
|---|---|---|---|---|
| C1 | 6- | BV | 5 | BV |
| C2 | 0 | BV | 0 | BV |
| C3 | 6 | BV | 5 | BV |
| BC1 | 5 | BV | 5 | BV |
| BC2 | 6- | BV | 5 | BV |
| BC3 | 6- | BB | 6- | BB |
| BC4 | 6 | BB | 6 | BB |
| BC5 | 5 | BV | 6 | BV |
| BC6 | 6- | BBV | 6 | BBV |
| BC7 | 5+ | BBV | 5+ | BBV |
| BC8 | 6 | BV | 6+ | BV |

| | | | | |
|---|---|---|---|---|
| BV = failure between basecoat and Variprime BB = failure between basecoat layers BBV = failure between basecoat layers and between basecoat and Variprime | | | | |

The data showed that the graft copolymers of this invention gave chip results comparable to the CAB blend and comparable to slightly better overall chip results than the conventional random acrylic polymer.

The table below shows the results of humidity cabinet testing after 96 hours exposure (ASTM D2247-92 testing water resistance of coatings in 100 % relative humidity) - X-hatch adhesion, grid hatch adhesion, and blistering per ASTM D3359-92A (measuring adhesion by tape test) and ASTM D714-87 (blistering):

| | **X-hatch** | **X-thatch** | **X-hatch** | **Grid hatch** | **Grid hatch** | **Grid hatch** | |
|---|---|---|---|---|---|---|---|
| **Basecoat** | **Initial** | **Wet** | **24 hr recovery** | **Initial** | **Wet** | **24 hr recovery** | |
| C1 | 10- | 6 BB | 10- | 4BB | 5 BB | 6 BB | |
| C2 | 10- | 6 BB | 10- | 8 BB | 0 BV | 6 BV | |
| C3 | 10- | 8BV | 10- | 7 BV | 8 BB | 8BV | |
| BC1 | 10* | 0 BBV | 10 | 10 | 0 BBV | 10- | |
| BC2 | 10 | 10- | 10 | 10 | 10 | 10- | |
| BC3 | 10 | 10- | 10 | 10- | 10- | 10- | |
| BC4 | 10- | 10 | 10 | 9 BB | 10- | 10 | |
| BC5 | 10 | 2 BV | 10 | 10 | 2 BV | 10 | |
| BC6 | 10 | 8 BV | 10 | 10 | 4 BV | 10 | |
| BC7 | 10 | 9 BB | 10- | 8 BB | 2 BB | 9 BB | |
| BC8 | 10 | 10 | 10 | 10- | 10- | 10 | |

| | | | | | | | |
|---|---|---|---|---|---|---|---|
| 10 = best BV = failure between basecoat and Variprime 0 = worst BB = failure between basecoat layers BBV = failure between basecoat layers and between basecoat and Variprime * some medium dense no. blisters in BC1 Initial = adhesion measured right before exposure in the humidity cabinet Wet = adhesion measured immediately after removed from humidity cabinet (panels were dried with towels first) 24 hours recovery = adhesion was measured after the panels dried for an additional 24 hours after exposure | | | | | | | |

Basecoats containing the graft copolymer of Example 3 showed quite robust humidity cabinet resistance when wax was not present in the basecoat compositions both with and without CAB. When CAB was removed and replaced with the graft copolymer even in the presence of wax, wet adhesion was good. In addition, it showed better overall humidity cabinet adhesion than the conventional random acrylic analogs. Basecoats containing the graft acrylic copolymer of Example 4 had weaker humidity cabinet resistance in the presence of CAB or CAB + wax, but had good humidity cabinet resistance in the absence of these two components.

### PAINT EXAMPLE 2

The following blends were made on an air mixer, adding the cellulose acetate butyrates (CAB's) to the mixture slowly with vigorous mixing:

| **Component** | **Wt (g) Blend D** | **Wt (g) Blend E** | **Wt (g) Blend F** | **Wt (g) Blend G** | **Wt (g) Blend H** | **Wt (g) Blend I** |
|---|---|---|---|---|---|---|
| n-Butyl acetate | 115.38 | 101.96 | 98.40 | 70.58 | 62.51 | 60.36 |
| Acetone | 76.92 | 67.98 | 65.60 | 47.05 | 41.67 | 40.24 |
| CAB 381-20 (Eastman Chemical Co.) | 23.50 | 0.00 | 0.00 | 14.14 | 0.00 | 0.00 |
| Graft copolymer of Example 3 | 0.00 | 45.86 | 0.00 | 0.00 | 27.58 | 0.00 |
| Graft copolymer of Example 7 | 0.00 | 0.00 | 51.81 | 0.00 | 0.00 | 31.16 |
| CAB 531-1 (Eastman Chemical Co.) | 8.06 | 8.06 | 8.06 | 5.03 | 5.03 | 5.03 |
| CAB 381-2 (Eastman Chemical Co.) | 2.01 | 2.01 | 2.01 | 1.26 | 1.26 | 1.26 |
| Wax dispersion** | 375.49 | 375.49 | 375.49 | 175.64 | 175.64 | 175.64 |
| Hyperbranched polyester resin (65% wt solids)** | 42.65 | 42.65 | 42.65 | 40.44 | 40.44 | 40.44 |
| Melamine resin (Surface Specialties, Inc.) | 0.00 | 0.00 | 0.00 | 16.11 | 16.11 | 16.11 |
| Carbamic resin (Surface Specialties, Inc.) | 5.98 | 5.98 | 5.98 | 8.67 | 8.67 | 8.67 |
| Random acrylic resin (60% wt solids)*** | 0.00 | 0.00 | 0.00 | 21.09 | 21.09 | 21.09 |
| **Total** | **650.00** | **650.00** | **650.00** | **400.00** | **400.00** | **400.00** |

| | | | | | | |
|---|---|---|---|---|---|---|
| Table Footnotes * The hyperbranched polyester polyol was prepared in accordance with the procedure described in Resin Solution 5 of WO 03/070843 published August 28, 2003 at page 23, line 21 to page 24, line 19 but made in methyl amyl ketone as the solvent versus propylene glycol monomethyl ether acetate. ** The wax dispersion was AC® 405-T ethylene vinyl acetate copolymer, 5.986% by wt in a 42.43/57.57 by weight blend of xylene/n-butyl acetate (Honeywell Specialty Chemicals - Wax & Additives). *** A random acrylic copolymer Sty/MMA/IBMA/HEMA (15/20/45/20% by weight) at 60% wt solids in xylene/methyl ethyl ketone (85/15) mixture was prepared with the standard free radical polymerization procedure and used in Blend G to I. | | | | | | |

The following were blended together and mechanically shaken prior to the specified reduction (reduced samples were stirred by hand with a spatula) to prepare silver basecoats of this invention (BC9 to BC10) and comparative example (C4):

| **Component** | **Wt (g) C4** | **Wt (g) BC9** | **Wt (g) BC10** |
|---|---|---|---|
| DuPont 894J Extra Course Aluminum Tinting | 116.39 | 116.39 | 116.39 |
| Blend D | 116.64 | 0.00 | 0.00 |
| Blend E | 0.00 | 116.64 | 0.00 |
| Blend F | 0.00 | 0.00 | 116.64 |
| Blend G | 66.96 | 0.00 | 0.00 |
| Blend H | 0.00 | 66.96 | 0.00 |
| Blend I | 0.00 | 0.00 | 66.96 |
| **Total** | **300.00** | **300.00** | **300.00** |
| Reduction by volume with DuPont 7175S Mid-Temp ChromaSystem Basemaker | **1/1** | **1/1** | **1/1** |

The silver basecoats were sprayed and the panels were prepared with the procedures described in Paint Example 1. Panels read by X-Rite were sprayed by Eclipse machine over pre-primed aluminum 4" x 6" panels but clearcoated by hand and cured as per the preceding description.

Below are the color readings recorded by a DuPont Chroma Vision Custom Color MA 100B meter manufactured by X-Rite, Inc. of Grandville, Michigan:

| | **NS** | **NS** | **NS** | **Flat** | | | | **High** | **High** | | | **Primer FT** | **BC FT** | **CC FT** | |
|---|---|---|---|---|---|---|---|---|---|---|---|---|---|---|---|
| **BC** | **L** | **A** | **B** | **L** | **A** | **B** | **L** | **A** | **B** | **Flop** | **Mottling** | **(mils)** | **(mils)** | **(mils)** | **Unique Composition** |
| C4 | 137.01 | 2.32 | 4.71 | 57.75 | 0.34 | 1.27 | 36.2 | -0.83 | -1.25 | 9.07 | 0 | 1.0 | 0.8 | 2.2 | Conventional random acrylic polymer with CAB 381-20 |
| BC9 | 136.97 | 1.72 | 2.55 | 64.87 | 0.251 | 0.52 | 37.3 | -0.88 | -1.35 | 7.97 | 0 | 1.0 | 0.9 | 2.0 | Graft copolymer of Example 3 with no CAB 381-20 |
| BC1 0 | 139.83 | 1.97 | 3.45 | 63.29 | 0.32 | 0.96 | 36.8 | -0.82 | -1.26 | 8.48 | 0 | 1.0 | 0.9 | 2.0 | Graft copolymer of Example 7 with no CAB 381-20 |

| | | | | | | | | | | | | | | | |
|---|---|---|---|---|---|---|---|---|---|---|---|---|---|---|---|
| NS = Near specular Mottling ratings: 0 = none 1= slight 2 = moderate 3 = severe | | | | | | | | | | | | | | | |

The color data indicated that the graft copolymer of this invention could effectively replace the CAB's completely and/or partially including the high molecular weight CAB 381-20 and still provided the control of the flake orientation.

The table below shows the results of gravelometer testing per ASTM-D-3170-87 using a 55 degree panel angle, with panels and stones kept in the freezer for a minimum of two hours prior to chipping:

| **Basecoat** | **Rating 1 pt** | **Locus of Failure 1 pt** | **Rating 3 pt** | **Locus of Failure 3 pt** |
|---|---|---|---|---|
| C4 | 6 | BBV | 5 | BBV |
| BC9 | 5 | BBV | 5 | BBV |
| BC10 | 6- | BBV | 5 | BBV |

| | | | | |
|---|---|---|---|---|
| BBV = failure between basecoat layers and between basecoat and Variprime | | | | |

The table below shows the results of gravelometer testing per ASTM-D-3170-87 using a 55 degree panel angle, with panels and stones kept in the freezer for a minimum of two hours prior to chipping (after air drying for 7 days after the 140°F x 30 minute bake, the panels were exposed in a humidity cabinet per ASTM-D-2247-92 at 100% relative humidity for 96 hours):

| **Basecoat** | **Rating 1 pt** | **Locus of Failure 1 pt** | **Rating 3 pt** | **Locus of Failure 3 pt** |
|---|---|---|---|---|
| C4 | 4 | BBV | 3 | BBV |
| BC9 | 6 | BB | 5 | BB |
| BC10 | 6- | BB | 5 | BB |

| | | | | |
|---|---|---|---|---|
| BBV = failure between basecoat layers and between basecoat and Variprime BB = failure between basecoat layers | | | | |

The data showed that chip resistance of the graft copolymer of this invention was comparable to CAB 381-20 under dry conditions but better under humid conditions.

The table below shows the results of humidity cabinet testing after 96 hours exposure (ASTM D2247-92 testing water resistance of coatings in 100 % relative humidity) - X-hatch adhesion, grid hatch adhesion, and blistering per ASTM D3359-92A (measuring adhesion by tape test) and ASTM D714-87 (blistering):

| | **X-hatch** | **X-hatch** | **X-hatch** | **Grid hatch** | **Grid hatch** | **Grid hatch** |
|---|---|---|---|---|---|---|
| **Basecoat** | **Initial** | **Wet** | **24 hr recovery** | **Initial** | **Wet** | **24 hr recovery** |
| C4 | 9 BB* | 0 BV | 3 BBV | 3 BBV | 0 BV | 0 BBV |
| BC9 | 10- | 9 BB | 9 BB | 6 BB | 3 BB | 6 BB |
| BC10 | 10 | 9 BB | 6 BB | 2 BBV | 1 BB | 1 BB |

| | | | | | | |
|---|---|---|---|---|---|---|
| 10 = best BV = failure between basecoat and Variprime 0 = worst BB = failure between basecoat layers BBV = failure between basecoat layers and between basecoat and Variprime * few no. 6 blisters Initial = adhesion measured right before exposure in the humidity cabinet Wet = adhesion measured immediately after removed from humidity cabinet (panels were dried with towels first) 24 hours recovery = adhesion was measured after the panels dried for an additional 24 hours after exposure | | | | | | |

The data showed that the graft copolymers of this invention were more robust in the humidity cabinet than CAB 381-20 and that the performance of the graft copolymer of Example 3 was more robust than that of the graft copolymer of Example 7.

## Claims

1. A process for producing a coating on the surface of a substrate, said process comprising:
applying a layer of a lacquer on said surface; and
drying said layer to form said coating on said surface of said substrate, wherein, said lacquer is a pigmented basecoat or a clearcoat composition, said lacquer composition comprising a graft copolymer with segmented side arm(s), wherein the graft copolymer has a polymeric backbone and segmented arm(s) formed of at least two polymeric segments of differing composition, grafted at a single point thereof to the backbone, wherein
(a) the backbone is of polymerized ethylenically unsaturated monomer(s); and
(b) the segmented arm(s) are of polymerized ethylenically unsaturated monomer(s) that are attached to the backbone via a single point,
and wherein at least one of the arm segments, which is at least one segment separated from the backbone, and the backbone contain one or more functional groups that are capable of interacting with each other for the formation of a reversible network, and the arm segment(s) adjacent to said arm segment is essentially free of said interactive functional groups,
wherein the functional groups are selected from at least one of the group consisting of carboxylic acid, hydroxyl, urea, amide, and ethylene oxide groups, and any mixture thereof, and wherein, the lacquer coating composition contains 5 to 90% by weight, based on the weight of the coating composition, of a film-forming binder containing the graft copolymer and 10 to 95% by weight, based on the weight of the coating composition, of a volatile organic liquid carrier and optionally contains pigments in a pigment to binder weight ratio of 0.1/100 to 200/100.

2. The process of claim 1, wherein the segmented arm(s) are formed from a macromonomer having a segmented structure that is polymerized into the backbone via a single terminal ethylenically unsaturated group.

3. The process of claim 1 wherein the segmented arm(s) are formed with two segments of either AB block or tapering architecture.

4. The process of claim 1, wherein the at least one segment on the arm that contains one or more of said functional groups is the furthest arm segment from the backbone.

5. The process of claim 1, wherein the at least one dissimilar arm segment is a non-functional segment, essentially free of functional groups.

6. The process of claim 1 wherein the segmented arm(s) contain an inner segment attached directly to the backbone and an adjacent outer segment attached to the inner segment, wherein the inner segment is essentially free of functional groups and the outer segment contains at least one of said functional groups.

7. The process of claim 1, wherein the segmented arm(s) of the graft copolymer are formed from a macromonomer having a segmented AB structure that is polymerized into the backbone via a single terminal ethylenically unsaturated group on the B segment.

8. The process of claim 7, wherein the B segment is a non-functional segment, essentially free of functional groups.

9. The process of claim 1, wherein the segmented polymer has a weight average molecular weight of about 5,000 to 200,000.

10. The process of claim 1, wherein at least 1% by weight of the monomers used to form the functional arm segment and backbone contain said interactive, functional groups.

11. The process of claim 1, wherein about 5 to 60% by weight of the monomers used to form the functional arm segment and backbone contain said interactive functional groups.

12. The process of claim 1, wherein the graft copolymer is made primarily from acrylic monomers.

13. The process of claim 1, wherein the graft copolymer is an ABA' graft copolymer, which comprises a polymeric backbone A' and segmented arm(s) formed of at least two polymeric segments A and B of differing composition, grafted onto the backbone, wherein
(b) the segmented arm(s) are of polymerized ethylenically unsaturated monomers that are attached to the backbone via a single point on the B segment,
and wherein the segments on the arm(s) are formed of substantially differing composition and
wherein the A and A' segments have the same or similar composition and the B segment has a different composition from the A and A' segments;
wherein the A and A' segments differ from the B segment by the presence of one or more functional groups that are capable of interacting with each other for the formation of a reversible network.

14. The process of claim 13 wherein the segmented arm(s) of the graft copolymer are formed from a macromonomer having a segmented A-B structure that is polymerized into the backbone via a single terminal ethylenically unsaturated group on the B segment.

15. The process of claim 1 or 13 wherein the network-forming group is selected - from the group consisting of carboxylic acid groups.

16. The process of claim 1 or 13, wherein said lacquer further comprises, as part of the binder, an acrylic polymer, polyester, a highly branched copolyester polyol, alkyd resin, acrylic alkyd resin, cellulose acetate butyrate, an iminated acrylic polymer, ethylene-vinyl acetate co-polymer, nitrocellulose, plasticizer or a combination thereof.

17. The process of claim 1 or 13, wherein said lacquer further comprises as part of the binder, a crosslinking agent.

18. The process of claim 1 or 13, wherein said lacquer further comprises metallic driers, chelating agents, or a combination thereof.

19. The process of claim 1 or 13, wherein the lacquer also comprises a pigment, flake or a combination thereof.

20. The process of claim 1 further comprising applying a layer of clear coating composition over said layer of said lacquer.

21. The process of claim 20 wherein said lacquer is a pigmented basecoat composition.

22. The process of claim 1 wherein said drying step takes place under ambient conditions.

23. The process of claim 1 wherein said drying step takes place at elevated temperatures.

24. A coated substrate produced in accordance with the process of claim 1.

## Patentansprüche

1. Verfahren für die Herstellung einer Beschichtung auf der Oberfläche eines Substrats, wobei das Verfahren Folgendes umfasst:
das Aufbringen einer Schicht eines Lacks auf die Oberfläche; und
das Trocknen der Schicht unter Bildung der Beschichtung auf der Oberfläche des Substrats, wobei der Lack eine pigmentierte Basislack- oder eine Klarlackzusammensetzung ist, wobei die Lackzusammensetzung ein Pfropfcopolymer mit segmentiertem Seitenarm/segmentierten Seitenarmen umfasst, wobei das Pfropfcopolymer eine polymere Rückgratkette und einen segmentierten Arm/segmentierte Arme aufweist, die aus mindestens zwei polymeren Segmenten verschiedener Zusammensetzung gebildet und an einer einzigen Stelle davon an die Rückgratkette angepfropft sind, wobei
(a) die Rückgratkette aus polymerisiertem ethylenisch ungesättigtem Monomer/polymerisierten, ethylenisch ungesättigten Monomeren besteht; und
(b) der segmentierte Arm/die segmentierten Arme aus polymerisiertem ethylenisch ungesättigtem Monomer/polymerisierten, ethylenisch ungesättigten Monomeren besteht, der/die über eine einzige Stelle an die Rückgratkette angepfropft ist/sind
und wobei mindestens eines der Armsegmente, das mindestens ein von der Rückgratkette getrenntes Segment ist, und die Rückgratkette eine oder mehrere funktionelle Gruppen enthalten, die in der Lage sind, miteinander zur Bildung eines reversiblen Netzwerks zu interagieren und das/die Armsegment(e), das/die neben dem Armsegment liegt/liegen, im Wesentlichen von den interaktiven funktionellen Gruppen frei ist/sind, wobei die funktionellen Gruppen aus mindestens einer der Gruppen ausgewählt sind bestehend aus Carbonsäure-, Hydroxyl-, Harnsäure-, Amid- und Ethylenoxidgruppen und irgendeiner Mischung davon und wobei die Lackbeschichtungszusammensetzung 5 bis 90 Gew.-%, auf das Gewicht der Beschichtungszusammensetzung bezogen, eines filmbildenden Bindemittels, das das Pfropfcopolymer enthält, und 10 bis 95 Gew.-%, auf das Gewicht der Beschichtungszusammensetzung bezogen, eines flüchtigen organischen flüssigen Trägers und wahlweise Pigmente in einem Verhältnis von Pigment zu Bindemittel von 0,1/100 bis 200/100 enthält.

2. Verfahren nach Anspruch 1, wobei der segmentierte Arm/die segmentierten Arme aus einem Makromonomer gebildet ist/sind, das eine segmentierte Struktur aufweist und in die Rückgratkette durch eine einzige endständige ethylenisch ungesättigte Gruppe polymerisiert ist.

3. Verfahren nach Anspruch 1, wobei der segmentierte Arm/die segmentierten Arme mit zwei Segmenten entweder einer AB-Block- oder sich verjüngenden Architektur gebildet sind.

4. Verfahren nach Anspruch 1, wobei das mindestens eine Segment an dem Arm, der eine oder mehrere der funktionellen Gruppen enthält, das am weitesten von der Rückgratkette entfernte Armsegment ist.

5. Verfahren nach Anspruch 1, wobei das mindestens eine unähnliche Armsegment ein nicht funktionelles Segment ist, das im Wesentlichen von funktionellen Gruppen frei ist.

6. Verfahren nach Anspruch 1, wobei der segmentierte Arm/die segmentierten Arme ein inneres Segment, das direkt an die Rückgratkette angeheftet ist, und ein daneben liegendes äußeres Segment, das an das innere Segment angeheftet ist, enthält/enthalten, wobei das innere Segment im Wesentlichen von funktionellen Gruppen frei ist und das äußere Segment mindestens eine der funktionellen Gruppen enthält.

7. Verfahren nach Anspruch 1, wobei der segmentierte Arm/die segmentierten Arme des Pfropfcopolymers aus einem Makromonomer gebildet ist/sind, das eine segmentierte AB-Struktur aufweist und in die Rückgratkette durch eine einzige endständige ethylenisch ungesättigte Gruppe am B-Segment polymerisiert ist.

8. Verfahren nach Anspruch 7, wobei das B-Segment ein nichtfunktionelles Segment ist, das im Wesentlichen von funktionellen Gruppen frei ist.

9. Verfahren nach Anspruch 1, wobei das segmentierte Polymer ein gewichtsdurchschnittliches Molekulargewicht von etwa 5.000 bis 200.000 aufweist.

10. Verfahren nach Anspruch 1, wobei mindestens 1 Gew.-% der Monomere, die zum Bilden des funktionellen Armsegments und der Rückgratkette verwendet werden, die interaktiven funktionellen Gruppen enthalten.

11. Verfahren nach Anspruch 1, wobei etwa 5 bis 60 Gew.-% der Monomere, die zum Bilden des funktionellen Armsegments und der Rückgratkette verwendet werden, die interaktiven funktionellen Gruppen enthalten.

12. Verfahren nach Anspruch 1, wobei das Pfropfcopolymer hauptsächlich aus Acrylmonomeren besteht.

13. Verfahren nach Anspruch 1, wobei das Pfropfcopolymer ein ABA'-Pfropfcopolymer ist, das eine polymere Rückgratkette A' und einen segmentierten Arm/segmentierte Arme umfasst, die aus mindestens zwei polymeren Segmenten A und B verschiedener Zusammensetzung gebildet und an die Rückgratkette angepfropft sind, wobei
der segmentierte Arm/die segmentierten Arme aus polymerisierten ethylenisch ungesättigten Monomeren besteht/bestehen, die an einem einzigen Punkt des B-Segmentes an die Rückgratkette angeheftet sind,
und wobei die Segmente an dem Arm/den Armen aus im Wesentlichen verschiedenen Zusammensetzungen gebildet sind und
wobei die A- und A'-Segmente dieselbe oder eine ähnliche Zusammensetzung aufweisen und das B-Segment eine andere Zusammensetzung als die A- und A'-Segmente aufweist;
wobei die A- und A'-Segmente sich von dem B-Segment durch Anwesenheit einer oder mehrerer funktioneller Gruppen unterscheiden, die in der Lage sind, miteinander zur Bildung eines reversiblen Netzwerks zu interagieren.

14. Verfahren nach Anspruch 13, wobei der segmentierte Arm/die segmentierten Arme des Pfropfcopolymers aus einem Makromonomer gebildet sind, das eine segmentierte A-B-Struktur aufweist und in die Rückgratkette über eine einzige endständige ethylenisch ungesättigte Gruppe am B-Segment polymerisiert ist.

15. Verfahren nach Anspruch 1 oder 13, wobei die Netzwerk bildende Gruppe aus der Gruppe ausgewählt ist bestehend aus Carbonsäuregruppen.

16. Verfahren nach Anspruch 1 oder 13, wobei der Lack des Weiteren als Teil des Bindemittels ein Acrylpolymer, einen Polyester, ein hochverzweigtes Copolyesterpolyol, Alkydharz, Acrylalkydharz, Celluloseacetatbutyrat, ein iminiertes Acrylpolymer, Ethylen-Vinylacetat-Copolymer, Nitrocellulose, Weichmacher oder eine Kombination davon umfasst.

17. Verfahren nach Anspruch 1 oder 13, wobei der Lack des Weiteren als Teil des Bindemittels ein Vernetzungsmittel umfasst.

18. Verfahren nach Anspruch 1 oder 13, wobei der Lack des Weiteren metallische Sikkative, Chelatbildner oder eine Kombination davon umfasst.

19. Verfahren nach Anspruch 1 oder 13, wobei der Lack auch ein Pigment, eine Flocke oder eine Kombination davon umfasst.

20. Verfahren nach Anspruch 1, des Weiteren das Aufbringen einer Schicht Klarbeschichtungszusammensetzung über die Schicht des Lacks umfassend.

21. Verfahren nach Anspruch 20, wobei der Lack eine pigmentierte Basislackzusammensetzung ist.

22. Verfahren nach Anspruch 1, wobei der Trocknungsschritt unter Umgebungsbedingungen stattfindet.

23. Verfahren nach Anspruch 1, wobei der Trocknungsschritt bei erhöhten Temperaturen stattfindet.

24. Beschichtetes Substrat, das dem Verfahren von Anspruch 1 gemäß hergestellt wird.

## Revendications

1. Procédé de production d'un revêtement sur la surface d'un substrat, ledit procédé comprenant:
l'application d'une couche de laque sur ladite surface; et
le séchage de ladite couche pour former ledit revêtement sur ladite surface dudit substrat, dans lequel ladite laque est une composition pour couche de fond pigmentée ou pour couche transparente, ladite composition de laque comprenant un copolymère greffé avec un(des) bras latéral(ux) segmenté(s), dans lequel le copolymère greffé a un squelette polymère et un/des bras segmenté(s) formé(s) d'au moins deux segments polymères de composition différente, greffé à un point unique de celui-ci au squelette dans lequel
(a) le squelette est constitué d'un(de) monomère(s) polymérisé(s) éthyléniquement insaturé(s); et
(b) le(s) bras segmenté(s) est(sont) constitué d'un(de) monomère(s) polymérisé(s) éthyléniquement insaturé(s) qui est(sont) fixé(s) au squelette via un point unique,
et dans lequel au moins l'un des segments formant bras, qui est au moins un segment séparé du squelette, et le squelette contiennent un ou plusieurs groupe(s) fonctionnel(s) qui est(sont) capable(s) d'interagir l'un avec l'autre pour la formation d'un réseau réversible, et le(s) segment(s) formant bras adjacent(s) audit segment formant bras est(sont) essentiellement exempt(s) desdits groupes fonctionnels interactifs, dans lequel les groupes fonctionnels sont choisis parmi au moins un élément du groupe constitué de l'acide carboxylique, du groupe hydroxyle, de l'urée, d'un amide, et d'oxyde d'éthylène, et de n'importe quel mélange de ceux-ci, et dans lequel, la composition de revêtement de type laque contient 5 à 90 % en poids, basé sur le poids de la composition de revêtement, d'un liant formant film contenant le copolymère greffé et 10 à 95 % en poids, basé sur le poids de la composition de revêtement, d'un support liquide organique volatile et contient éventuellement des pigments en un rapport en poids pigment sur liant de 0,1/100 à 200/100.

2. Procédé selon la revendication 1, dans lequel le(les) bras segmenté(s) est(sont) formé(s) d'un macromonomère ayant une structure segmentée qui est polymérisée dans le squelette *via* un groupe terminal unique éthyléniquement insaturé.

3. Procédé selon la revendication 1, dans lequel le(les) bras segmenté(s) est(sont) formé(s) de deux segments parmi soit un bloc AB soit une architecture en pointe.

4. Procédé selon la revendication 1, dans lequel le au moins un segment sur le bras qui contient un ou plusieurs desdits groupes fonctionnels est le segment formant bras le plus éloigné du squelette.

5. Procédé selon la revendication 1, dans lequel le au moins un segment dissemblable formant bras est un segment non fonctionnel, essentiellement exempt de groupes fonctionnels.

6. Procédé selon la revendication 1 dans lequel le(s) bras segmenté(s) contient(nnent) un segment interne fixé directement au squelette et un segment externe adjacent fixé au segment interne, dans lequel le segment interne est essentiellement exempt de groupes fonctionnels et le segment externe contient au moins l'un desdits groupes fonctionnels.

7. Procédé selon la revendication 1, dans lequel le(s) bras segmenté(s) du copolymère greffé est(sont) formé(s) d'un macromonomère ayant une structure AB segmentée qui est polymérisée dans le squelette via un groupe terminal unique éthyléniquement insaturé sur le segment B.

8. Procédé selon la revendication 7, dans lequel le segment B est un segment non fonctionnel, essentiellement exempt de groupes fonctionnels.

9. Procédé selon la revendication 1, dans lequel le polymère segmenté a un poids moléculaire moyen en poids d'environ 5.000 à 200.000.

10. Procédé selon la revendication 1, dans lequel au moins 1 % en poids des monomères utilisés pour former le segment fonctionnel formant bras et le squelette contiennent lesdits groupes fonctionnels interactifs.

11. Procédé selon la revendication 1, dans lequel environ 5 à 60 % en poids des monomères utilisés pour former le segment fonctionnel formant bras et le squelette contiennent lesdits groupes fonctionnels interactifs.

12. Procédé selon la revendication 1, dans lequel le copolymère greffé est principalement constitué de monomères acryliques.

13. Procédé selon la revendication 1, dans lequel le copolymère greffé est un copolymère greffé ABA', qui comprend un squelette A' polymère et un(des) bras segmenté(s) formé(s) d'au moins deux segments A et B polymères de composition différente, greffés sur le squelette, dans lequel
le(s) bras segmenté(s) est(sont) constitué(s) de monomères polymérisés éthyléniquement insaturés qui est(sont) fixé(s) au squelette via un point unique sur le segment B,
et dans lequel les segments sur le(s) bras sont formés d'une composition substantiellement différente et
dans lequel les segments A et A' ont la même composition ou une composition semblable et le segment B a une composition différente des segments A et A';
dans lequel les segments A et A' diffèrent du segment B par la présence d'un ou plusieurs groupe(s) fonctionnel(s) qui est(sont) capable(s) d'interagir l'un avec l'autre pour la formation d'un réseau réversible;

14. Procédé selon la revendication 13, dans lequel le(s) bras segmenté(s) du copolymère greffé est(sont) formé(s) d'un macromonomère ayant une structure A-B segmentée qui est polymérisée dans le squelette *via* un groupe terminal unique éthyléniquement insaturé sur le segment B.

15. Procédé selon la revendication 1 ou 13, dans lequel le groupe formant réseau est choisi parmi le groupe constitué de groupes acide carboxylique.

16. Procédé selon la revendication 1 ou 13, dans lequel ladite laque comprend en outre, comme partie du liant, un polymère acrylique, un polyester, un copolyester polyol fortement ramifié, une résine alkyde, une résine alkyde acrylique, de l'acétate butyrate de cellulose, un polymère acrylique iminé, un copolymère d'éthylène-acétate de vinyle, de la nitrocellulose, un plastifiant ou une combinaison de ceux-ci.

17. Procédé selon la revendication 1 ou 13, dans lequel ladite laque comprend en outre comme partie du liant, un agent de réticulation.

18. Procédé selon la revendication 1 ou 13, dans lequel ladite laque comprend en outre des agents desséchants métalliques, des agents chélatants, ou une combinaison de ceux-ci.

19. Procédé selon la revendication 1 ou 13, dans lequel la laque comprend également un pigment, un flocon ou une combinaison de ceux-ci.

20. Procédé selon la revendication 1, comprenant en outre l'application d'une couche d'une composition de revêtement transparent sur ladite couche de ladite laque.

21. Procédé selon la revendication 20, dans lequel ladite laque est une composition pigmentée pour couche de fond.

22. Procédé selon la revendication 1, dans lequel ladite étape de chauffage a lieu sous des conditions ambiantes.

23. Procédé selon la revendication 1, dans lequel ladite étape de séchage a lieu à des températures élevées.

24. Substrat revêtu produit conformément au procédé selon la revendication 1.
